(19) Europäisches Patentamt
European Patent Office
Office européen des brevets

(11) EP 2 698 252 A1

(12) EUROPEAN PATENT APPLICATION
published in accordance with Art. 153(4) EPC

(43) Date of publication:
**19.02.2014 Bulletin 2014/08**

(21) Application number: **11863540.8**

(22) Date of filing: **30.11.2011**

(51) Int Cl.:
***B32B 27/36*** *(2006.01)* ***B32B 7/02*** *(2006.01)*
***B32B 27/00*** *(2006.01)* ***G02B 5/26*** *(2006.01)*
***G02B 5/28*** *(2006.01)*

(86) International application number:
**PCT/JP2011/078228**

(87) International publication number:
**WO 2012/140807 (18.10.2012 Gazette 2012/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.04.2011 JP 2011088284**

(71) Applicant: **Teijin Limited**
**Osaka-shi, Osaka 541-0054 (JP)**

(72) Inventors:
- **OYA, Taro**
  **Anpachi-gun**
  **Gifu 503-0123 (JP)**
- **ONO, Yuhei**
  **Hino-shi**
  **Tokyo 191-0065 (JP)**
- **UCHIYAMA, Akihiko**
  **Tokyo 100-0013 (JP)**

(74) Representative: **Hallybone, Huw George**
**Carpmaels & Ransford LLP**
**One Southampton Row**
**London WC1B 5HA (GB)**

# (54) ORIENTED LAMINATED FILM

(57) Provided is an oriented laminated film, characterized in that the film is obtained by alternately laminating Layer A and Layer B such that reflection is generated by optical interference due to a difference in refractive indices of Layer A and Layer B, wherein Layer A comprises an aromatic polyester containing trimethylene-2,6-naphthalenedicarboxylate as a main repeating unit and has a layer thickness in a range of 0.05 to 0.5 μm and Layer B comprises a polylactic acid composition and has a layer thickness in a range of 0.05 to 0.5 μm, and a reflectivity curve thereof for light in a wavelength range of 400 to 1,600 nm has a reflection peak having a maximum reflectivity which is at least 20% higher than the reflectivity baseline. The present invention can provide a laminated film having high reflectivity with improved thickness variation associated with stretching treatment and improved hue irregularity attributable to a state of lamination.

Fig. 1

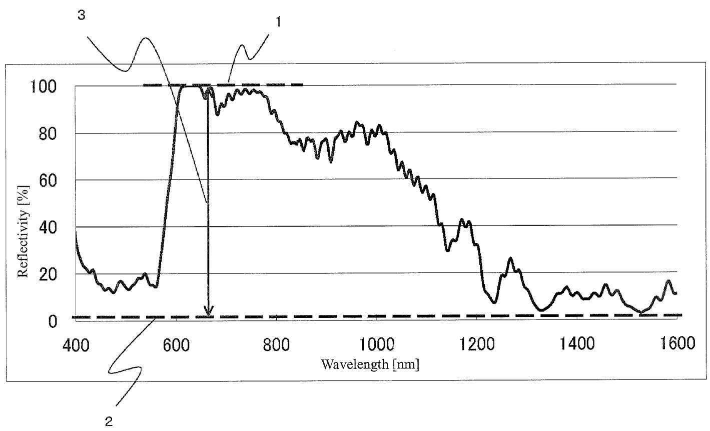


EP 2 698 252 A1

## Description

[Technical Field]

The present invention relates to a laminated film. More particularly, the present invention relates to an oriented laminated film which can selectively reflect light of an arbitrary wavelength range.

[Background Art]

A laminated film can be made into an optical interference film by laminating a layer having a low refractive index and a layer having a high refractive index alternately, the optical interference film selectively reflecting or transmitting light of specific wavelength by constructive light interference between the layers.

When such a laminated film is multilayered and the wavelength which is selectively reflected or transmitted is selected from a visible range, there can be obtained a film having excellent design characteristics due to structural coloration, for example, one having a metallic gloss.

Furthermore, because the design characteristics obtained here is due to the structural coloration of the multilayer laminated film, the film is free from a problem of color fading in contrast to coloration with a dye and the like. Further, by gradually changing the film thickness or by laminating films having different reflection peaks, the resulting multilayer laminated film can acquire high light reflectivity equivalent to that of a vapor-deposited film obtained using a metal or the like, and can be used as a metallic gloss film or a reflecting mirror.

As such a laminated film, there has been proposed a multilayer laminated film wherein a polylactic acid layer is used and a layer contiguous to this polylactic acid layer is one having a refractive index which is different from that of the polylactide (polylactic acid) layer by at least about 0.03 (see, for example, Patent Literature 1).

The polylactic acid as a plant-derived material not only has a possibility to become a substitute for petroleum-derived resins but also, when fabricated into a film, is characterized for its optical properties, wherein the film shows a low refractive index practically without any change therein even after biaxial stretching and crystallization.

Among the proposals in Patent Literature 1, there is specifically exemplified a laminated film comprising a polylactic acid resin and polyethylene terephthalate or its copolymer. However, the melting point of polyethylene terephthalate is about 256°C and, on the other hand, that of the polylactic acid resin is about 170°C. Therefore, at least after lamination, the laminated state has to be maintained at a temperature of about 280°C and, as a result, there has been a problem that the polylactic acid begins to decompose, generating foreign matter defects and the like and making it difficult to process uniform stretching treatment. Moreover, because the two resins are significantly different also from the viewpoint of melt viscosity, there has been a problem that a homogeneous laminated state cannot be achieved and only a film having large hue irregularity could be obtained.

[Citation List]

[Patent Document 1] Japanese Patent Application Laid-Open No. 2009-501096

[Disclosure of the Invention]

[Problems to be Solved by the Invention]

The object of the present invention is to resolve the problems of the prior art mentioned above and to provide a laminated film with improved hue irregularity while maintaining high reflectivity.

[Means for Solving the Problems]

In view of the above-mentioned prior art, the present inventors paid particular attention to the other layer with which the polylactic acid layer is laminated. As a result of continued research, the present inventors found that the difference in the glass transition temperatures of the polymers which constitute the two layers was preferably 20°C or less and that the melting point of the polymer of the other layer was preferably 230°C or less. In the technology described in the aforementioned Patent Document 1, neither recognition nor description is seen that it is important to satisfy these two physical properties at the same time and, also, no hint is given as to a specific combination of polymers of the two layers which realizes them.

Further, as a result, it became clear that, with the technology described in the Patent Document 1, it is extremely difficult to produce a uniform film with little foreign matter and with suppressed occurrence of hue irregularity and reflectivity irregularity which appear at random positions on the film caused by film thickness irregularity and stretch-orientation

irregularity.

The present inventors conducted diligent research on this problem and have found that the object of the present invention can be achieved when a layer comprising an aromatic polyester containing trimethylene-2,6-naphthalenedicarboxylate as a main repeating unit is laminated in combination with the polylactic acid layer, especially a stereocomplex polylactic acid layer. After conducting further diligent research, the inventors have reached the present invention.

That is, the object of the present invention can be achieved by:

1. an oriented laminated film, characterized in that the film is obtained by alternately laminating Layer A and Layer B such that reflection is generated by optical interference due to a difference in refractive indices of Layer A and Layer B, wherein Layer A comprises an aromatic polyester containing a trimethylene-2,6-naphthalenedicarboxylate unit as a main repeating unit and has a layer thickness in a range of 0.05 to 0.5 μm; Layer B comprises a polylactic acid composition and has a layer thickness in a range of 0.05 to 0.5 μm; and a reflectivity curve thereof for light in a wavelength range of 400 to 1,600 nm has a reflection peak having maximum reflectivity which is at least 20% higher than the reflectivity baseline; and also by the following;
2. the oriented laminated film according to 1 above, which is a biaxially oriented laminated film;
3. the oriented laminated film according to 1 or 2 above, wherein Layer B is a polylactic acid composition having a melting point in a range of 150°C to 230°C;
4. the oriented laminated film according to any of 1 to 3 above, wherein a degree of stereocomplex crystallinity (S) of the polylactic acid composition which constitutes Layer B is 90% or more;
5. the oriented laminated film according to any of 1 to 4 above, wherein Layer A comprises an aromatic polyester containing 90 mol% or more of trimethylene-2,6-naphthalenedicarboxylate units based on the total repeating units; and
6. the oriented laminated film according to any of 1 to 5 above, wherein the outermost layers are Layer B laminated as protective layers.

[Brief Description of the Drawings]

Figure 1 is a graph showing a reflectivity curve of an oriented laminated film in Example 2 of the present invention and, in the figure, the vertical axis and the horizontal axis show the reflectivity (%) and the wavelength (nm), respectively.

[Advantageous Effects of Invention]

According to the present invention, there can be provided a laminated film with improved foreign matter irregularity and hue irregularity, while showing high reflectivity.

Furthermore, by controlling the number of laminated layers, the layer thickness, the film stretching ratio, and the like, the laminated film can be made to selectively reflect light of an arbitrary wavelength range.

In the oriented laminated film of the present invention, thickness irregularity associated with stretching treatment and hue irregularity attributable to a state of lamination are improved; also, by controlling the number of laminated layers, the layer thickness, the film stretching ratio, and the like, the laminated film can be made to selectively reflect light of an arbitrary wavelength range; and the film provides excellent design characteristics such as a metallic gloss due to structural coloration. Further, if uniaxial orientation is performed, a film can be formed which reflects only specific polarized light.

Furthermore, when attention is paid to decorativeness, for example, such a laminated film can be used as a decorative film bonded to a resin molded article obtained by in-mold forming and the like. Especially, the elastic modulus of the film of the present invention, at the time of high-temperature molding, is lower compared to the conventional laminated film because of use of polylactic acid and, as a result, the film has good suitability for in-mold forming. In the in-mold forming, when a thermoplastic resin of good thermal conductivity, for example, one containing fillers such as carbon fiber and the like, is used as a molding base material and the laminated film of the present invention having metallic gloss is subjected to decorative molding, a resin molded article can be formed which, though the integrally molded article is made of a resin, looks like a metal and feels cold to touch so that it gives an illusion as if it were a metal formed body.

Moreover, the film of the present invention can be used suitably as a packaging film which requires a good handling property and high level of mechanical characteristics capable of protecting the contents; as an anti-counterfeit film such as a dichroic mirror and a hologram seal; and, being a film having a reflection peak in the near-infrared region, as a thermal radiation reflecting film which cuts off near-infrared rays and, also, as a film for cutting off near-infrared wavelength rays of a plasma display. Furthermore, when the film is uniaxially oriented, it can be used as polarized

sunglasses and also as a reflective polarizing film.

[Description of Embodiments]

Hereinafter, the present invention will be described in detail.

<Aromatic polyester containing trimethylene-2,6-naphthalenedicarboxylate as main repeating unit>

The oriented laminated film of the present invention is an oriented film, wherein Layer A comprising an aromatic polyester (hereinafter, may be abbreviated simply as Layer A) and Layer B comprising a polylactic acid composition (hereinafter, may be abbreviated simply as Layer B) are laminated, the aromatic polyester containing a trimethylene-2,6-naphthalenedicarboxylate unit as a main repeating unit. In the present invention, the term "main" means that 80 mol% or more is accounted for by the trimethylene-2,6-naphthalenedocarboxylate unit based on the total repeating units of the aromatic polyester. This polymer satisfies the above-mentioned requirements wherein the difference between the glass transition temperature thereof and that of polylactic acid is 20°C or less and the melting point of the polymer is 230°C or less. When the melting point exceeds 230°C, the film-forming temperature also has to be set at a temperature exceeding 230°C. As a result, polylactic acid which is melt-extruded concurrently is induced to decompose and becomes the cause of foreign matter defects on the laminated film and process contamination.

In addition, the aromatic polyester may be copolymerized with publicly known copolymerizable components to an extent that does not impair the object of the present invention. However, when copolymerization is carried out, the amount of the copoymerizable components is, from the viewpoint of controlling the change in characteristics in a certain range, preferably restricted to less than 20 mol% based on the total carboxylic acid components which constitute the aromatic polyester. When the amount of the copolymerizable components is excessive, the melting point drops, crystallinity decreases, and a high refractive index becomes difficult to be manifested at the time of stretching. From these viewpoints, it is preferable that the trimethylene-2,6-naphthalenedicarboxylate unit accounts for 90 mol% or more based on the total repeating units of the aromatic polyester.

<Polylactic acid composition>

On the other hand, in the present invention, Layer B is preferably a polylactic acid composition. Although the polylactic acid composition preferably shows crystallinity, it may be an amorphous polylactic acid composition made from a mixture of poly(L-lactic acid) and poly(D-lactic acid). The polylactic acid composition which constitutes Layer B is further preferably a polylactic acid composition having a melting point from 150°C to 230°C. When the melting point is less than 150°C or more than 230°C, a laminated state with Layer A cannot be maintained homogeneously. The melting point is more preferably from 170°C to 220°C. As polylactic acid which shows such a melting point, there may suitably be used poly(L-lactic acid) having an optical purity of 99% or more, poly(D-lactic acid) having an optical purity of 99% or more, stereocomplex polylactic acid forming stereocomplex crystals, and the like. As the polylactic acid, there may be used one wherein L-lactic acid and/or D-lactic acid account for 50% or more of the total repeating units.

In addition, the polylactic acid in the present invention is preferably stereocomplex polylactic acid containing stereocomplex crystals.

When the polylactic acid contains stereocomplex crystals, heat resistance of the laminated film can be further improved compared to the laminated film using a layer composed of polylactic acid.

In the present invention, the stereocomplex polylactic acid is one which contains a poly(D-lactic acid) component and a poly(L-lactic acid) component and has stereocomplex crystals, and is preferably a polylactic acid composition wherein the degree of stereocomplex crystallinity (S) represented by the equation (i) is 90% or more. {The degree of stereocomplex crystallinity (S) was determined by the following equation (i) from the heat of melting of polylactic acid homocrystals ($\Delta Hm_h$) and the heat of melting of polylactic acid stereocomplex ($\Delta Hm_{sc}$) observed by differential scanning calorimetry (DSC) measurement at lower than 190°C and at higher than 190°C, respectively:

$$(S) = [\Delta Hm_{sc} / (\Delta Hm_h + \Delta Hm_{sc})] \times 100 \qquad (i)\}$$

When the degree of stereocomplex crystallinity (S) is 90% or more, stereocomplex polylactic acid with a high degree of crystallinity can be obtained. The degree of stereocomplex crystallinity (S) is selected from a range of preferably from 93% to 100% and more preferably from 95% to 100%. Especially preferable is when the degree of stereocomplx crystallinity (S) is 100%.

Moreover, in the present invention, the stereocomplex polylactic acid composition preferably has crystallinity

and, more preferably, has a stereocomplex crystallization ratio (Sc) of 50% or more, wherein the crystallization ratio is defined by formula (ii) based on the peak intensity ratio of diffraction peaks observed by wide-angle X ray diffraction (XRD) measurements. The range of crystallization ratio selected is preferably from 50 to 100%, more preferably 70 to 100%, and particularly preferably from 90 to 100%:

$$Sc(\%) = [\Sigma Isci / (\Sigma Isci + I_{HM})] \times 100 \qquad (ii)$$

where $\Sigma Isci = Isc_1 + Isc_2 + Isc_3$; SCi (i = 1 to 3) represents integrated intensities of diffraction peaks in the neighborhood of $2\theta$ = ca. 12.0°, 20.7°, and 24.0°, respectively; $I_{HM}$ represents the integrated intensity of a diffraction peak derived from homocrystals which appears in the neighborhood of $2\theta$ = 16.5°.]

Further, from a similar viewpoint, in the present invention, the crystallization ratio of the polylactic acid homocrystals, especially that determined by XRD measurements is selected in a range of at least 5%, preferably from 5 to 60%, more preferably from 7 to 50%, and even more preferably from 10 to 45%.

Furthermore, the melting point of the stereocomplex polylactic acid is suitably selected in a range of from 190 to 230°C and more preferably from 200 to 225°C; and the enthalpy of crystal melting as determined by a DSC measurement is selected in a range of 20 J/g or more, preferably from 20 to 80 J/g, and more preferably from 30 to 80 J/g.

This is so because, when the melting point of the stereocomplex polylactic acid is less than 190°C, formation of the stereocomplex crystals becomes less meaningful; and, further, when the melting point exceeds 230°C, a high temperature condition exceeding 230°C becomes necessary when a film is formed, making it difficult in some cases to suppress thermal decomposition of the stereocomplex polylactic acid composition.

In addition, a similar argument also applies to values of the enthalpy of crystal melting.

In order to suitably satisfy these degrees of stereocomplex crystallinity (S), stereocomplex crystallization ratios (Sc), and the above-mentioned various parameters of crystallinity, the weight ratio of the poly(D-lactic acid) component and the poly(L-lactic acid) component in polylactic acid is preferably from 90/10 to 10/90.

The above weight ratio is more preferably from 80/20 to 20/80, even more preferably from 30/70 to 70/30, and especially preferably from 40/60 to 60/40. Theoretically, a ratio as close to 1/1 as possible is preferably selected

Further, the content of polylactic acid component in the stereocomplex polylactic acid composition needs to be 50 weight% or more, preferably 75 weight% or more, even more preferably 95% or more, and most preferably 100 weight%. When the content of the polylactic acid is less than 90 weight%, the composition does not comply with the purpose of the present invention which is to provide an oriented laminated film using polylactic acid. When a resin other than polylactic acid is contained, it is, from the viewpoint of film-forming property, preferably a thermoplastic resin.

As the thermoplastic resin other than polylactic acid, there may be mentioned, for example, a polyester resin other than polylactic acid, a polyamide resin, a polyacetal resin, polyolefin resins such as a polyethylene resin, a polypropylene resin, and the like, a polystyrene resin, an acrylic resin, a polyurethane resin, a chlorinated polyethylene resin, a chlorinated polypropylene resin, aromatic and aliphatic polyketone resins, a fluororesin, a polyphenylene sulfide resin, a polyetherketone resin, a polyimide resin, a thermoplastic starch resin, an AS (acrylonitrile-styrene) resin, an ABS (acrylonitrile-styrene-butadiene) resin, an AES resin (acrylonitrile-ethylene/propylene/diene-styrene), an ACS resin (acrylonitrile-chlorinated polyethylene-styrene) resin, a polyvinyl chloride-type resin, a polyvinylidene chloride resin, a vinyl ester-type resin, an MS (methacrylate-styrene) resin, a polycarbonate resin, a polyarylate resin, a polysulfone resin, a polyether sulfone resin, a phenoxy resin, a polyphenylene oxide resin, poly-4-methylpentene-1, a polyether imide resin, a polyvinyl alcohol resin, and the like. Among these, polymethyl methacrylate is preferable from a view-point that it has good compatibility with polydactyl acid and has a refractive index which is close to that of polydactyl acid.

Additionally, the polydactyl acid composition preferably contains a compound having a specific functional group as a hygrothermal resistance improver. The hygrothermal resistance improver is preferably one which functions mainly as a carboxyl end group blocking agent and may be exemplified by a carbodiimide compound, an aromatic carbodiimide compound, an epoxy compound, and an oxazoline compound. Among these, preferable in terms of the effect is the carbodiimide compound. The amount blended is preferably in a range of 0.001 to 5 weight parts relative to 100 weight parts of the polydactyl acid composition. When the amount is less than 0.001 weight part, the function as a carboxyl group blocking agent is not sufficiently exhibited. Also, application of an amount exceeding this range is undesirable because concern increases that the hue of the resin deteriorates or plasticization thereof occurs due to unfavorable side reactions such as decomposition of the agent and the like.

The carbodiimide compound is a compound having at least one carbodiimide functional group in the molecule and is exemplified, for example, by the following compounds. Especially, in the case of the carbodiimide compound, even when polydactyl acid generates a terminal double bond and a terminal carboxyl group by the mechanism of the following reaction (6) or a terminal carboxyl group is generated due to hydrolysis, blocking of the terminal and polymer chain extension are made possible by a reaction of the terminal carboxyl group and the carbodiimide group, and thus

prevention of embrittlement of the polydactyl acid composition becomes possible.

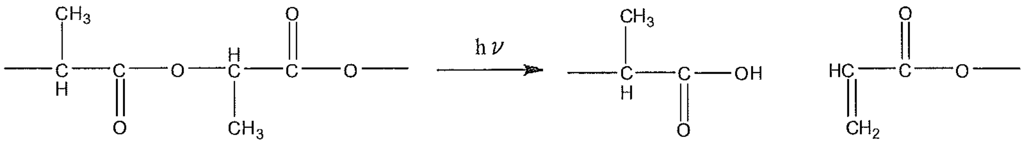


(6)

The carbodiimide compound includes, for example, monocarbodiimide compounds or polycarbodiimide compounds such as dicyclohexylcarbodiimide, diisopropylcarbodiimide, diisobutylcarbodiimide, dioctylcarbodiimide, octyldecylcarbodiimide, di-tert-butylcarbodiimide, dibenzylcarbodiimide, N-octadecyl-N'-phenylcarbodiimide, N-benzyl-N'-phenylcarbodiimide, N-benzyl-N'-tolylcarbodiimide, N-tolyl-N'-cyclohexylcarbodiimide, p-phenylenebis(cyclohexylcarbodiimide), hexamethylenebis(cyclohexylcarbodiimide), ethylenebis(phenylcarbodiimide), ethylenebis(cyclohexylcarbodiimide), and the like.

Furthermore, as the aromatic carbodiimide compound includes, for example, monocarbodoimide compounds or polycarbodiimide compounds such as diphenylcarbodiimide, di-o-toluylcarbodiimide, di-p-toluylcarbodiimide, bis(p-aminophenyl)carbodiimide, bis(p-chlorophenyl)carbodiimide, bis(o-chlorophenyl)carbodiimide, bis(o-ethylphenyl)carbodiimide, bis(p-ethylphenyl)carbodiimide, bis(o-isopropylphenyl)carbodiimide, bis(p-isopropylphenyl)carbodiimide, bis(o-isobutylphenyl)carbodiimide, bis(p-isobutylphenyl)carbodiimide, bis(2,5-dichlorophenyl)carbodiimide, bis(2,6-dimethylphenyl)carbodiimide, bis(2,6-diethylphenyl)carbodiimide, bis(2-ethyl-6-isopropylphenyl)carbodiimide, bis(2-butyl-6-isopropylphenyl)carbodiimide, bis(2,6-diisopropylphenyl)carbodiimide, bis(2,6-di-tert-butylphenyl)carbodiimide, bis(2,4,6-trimethylphenyl)carbodiimide, bis(2,4,6-triisopropylphenyl)carbodiimide, bis(2,4,6-tributylphenyl)carbodiimide, di-β-naphthylcarbodiimide, N-tolyl-N'-phenylcarbodiimide, p-phenylenebis(o-toluylcarbodiimide), p-phenylenebis(p-chlorophenylcarbodiimide), 2,6,2',6'-tetraisopropyldiphenylcarbodiimide, and the like.

Also, among these, industrially available dicyclohexylcarbodiimide and bis(2,6-diisopropylphenyl)carbodiimide can be suitably used. The commercially available polycarbodiimide compounds have a merit that they can be used without necessity of synthesis. As such commercially available polycarbodiimide compounds, there may be favorably mentioned, for example, those sold by Nisshinbo Chemical Inc. under the trade name of CARBODILITE (trade name), including CARBODILITE (trade name) LA-1 or HMV-CA; and aqueous types such as CARBODILITE (trade name) V-02, CARBODILITE (trade name) V-02-L2, CARBODILITE (trade name) V-04, CARBODILITE (trade name) E-01, CARBODILITE (trade name) E-02, CARBODILITE (trade name) E-03A, and CARBODILITE (trade name) E-04; those sold by Rhein Chemie Japan, Ltd. under the trade name of STABAXOL (trade name), including STABAXOL (trade name) I, STABAXOL (trade name) P, STABAXOL (trade name) P-100; and the like.

As the carbodiimide compound, especially preferable is a carbodiimide having a cyclic structure proposed in International Publication No. WO2010/071213. This compound is suitably used because, when a resin containing the carbodiimide is melted, it does not emit toxic gases such as isocyanate and the like. Further, compared with the chain-like carbodiimide, the cyclic carbodidimde is advantageous in the following respect. That is, when a cyclic carbodiimide reacts with a carboxyl terminal group of polylactic acid, the carbodiimide is incorporated into the terminal group of the polymer chain and, moreover, the terminal thereof turns into an isocyanate group without releasing a low-molecular isocyanate compound; and further this isocyanate group makes extension of the polymer chain possible.

This cyclic structure has one carbodiimide group (-N=C=N-) and the first nitrogen and the second nitrogen thereof are linked by a linking group. Although one cyclic structure contains only one carbodiimide group, it goes without saying that, when there are a plurality of cyclic structures in one molecule as, for example, in a spiro ring, there may be contained a plurality of carbodiimide groups in the compound as long as one carbodiimide is contained in each cyclic structure bonded to the spiro atom.

The number of atoms contained in the cyclic structure is preferably 8 to 50, more preferably 10 to 30, and even more preferably 10 to 20.

Here, the number of atoms in a cyclic structure means the number of atoms which directly constitute the ring structure. For example, in the case of a 8-membered ring, the number of atoms is 8; and, in the case of a 50-membered ring, the number of atoms is 50. This is so because, if the number of atoms in a cyclic structure is less than 8, stability of the cyclic carbodiimide compound decreases and, in some cases, storage and use thereof become difficult. In addition, from the viewpoint of reactivity, there is no particular restriction to the upper limit of the number of atoms in the ring but a cyclic carbodiimide compound having more than 50 atoms becomes difficult to synthesize and, sometimes, cases arise when the cost increases significantly. From these viewpoints, the number of atoms in the cyclic structure is selected preferably from a range of 10 to 30 and more preferably from a range of 10 to 20.

The cyclic structure is preferably one represented by the following formula (10):

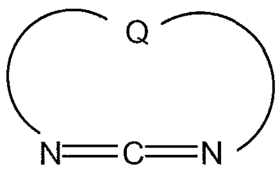

(10)

In the formula, Q is a divalent to tetravalent linking group including an aliphatic group, an alicyclic group, an aromatic group, or a combination of these, which may respectively contain a heteroatom or a substituent. The heteroatom, in this case, indicates O, N, S, and P. Of the valences of this linking group, 2 valences are used to form a cyclic structure. When Q is a trivalent or tetravalent linking group, it is bound to a polymer or another cyclic structure via a single bond, a double bond, an atom, or an atomic group.

The linking group is a divalent to tetravalent aliphatic group having 1 to 20 carbon atoms, a divalent to tetravalent alicyclic group having 3 to 20 carbon atoms, a divalent to tetravalent aromatic group having 5 to 15 carbon atoms, or a combination of these; and selected is a linking group having the necessary number of carbon atoms to form the cyclic structure specified above. Examples of the combination include an alkylene-arylene group wherein an alkylene group and an arylene group are bound, and the like.

The linking group Q is preferably a divalent to tetravalent linking group represented by the following formula (10-1), (10-2), or (10-3):

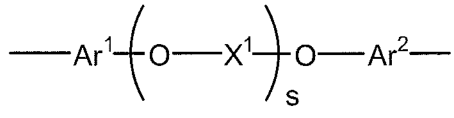

(10-1)

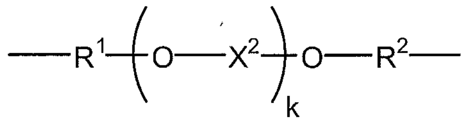

(10-2)

$-X^3-$ (10-3)

In the formula, $Ar^1$ and $Ar^2$ each independently represent a divalent to tetravalent aromatic group having 5 to 15 carbon atoms, which may respectively contain a heteroatom and a substituent,.

The aromatic group includes an arylene group having 5 to 15 carbon atoms, an arenetriyl group having 5 to 15 carbon atoms, and an arenetetrayl group having 5 to 15 carbon atoms, each of which may contain a heteroatom to form a heterocyclic structure. The arylene group (divalent) includes a phenylene group, naphthalenediyl group, and the like. The arenetriyl group (trivalent) includes a benzenetriyl group, a naphthalenetriyl group, and the like. The arenetetrayl group (tetravalent) includes a benzenetetrayl group, a naphthalenetetrayl group, and the like. These aromatic groups may be substituted. The substituent includes an alkyl group having 1 to 20 carbon atoms, an aryl group having 6 to 15 carbon atoms, a halogen atom, a nitro group, an amide group, a hydroxyl group, an ester group, an ether group, an aldehyde group, and the like.

$R^1$ and $R^2$ each independently represent a divalent to tetravalent aliphatic group having 1 to 20 carbon atoms, a divalent to tetravalent alicyclic group having 3 to 20 carbon atoms, and a combination of these, each of which may contain a heteroatom or a substituent; or a combination of these aliphatic and alicyclic groups with a divalent to tetravalent aromatic group having 5 to 15 carbon atoms. The aliphatic group includes an alkylene group having 1 to 20 carbon atoms, an alkanetriyl group having 1 to 20 carbon atoms, an alkanetetrayl group having 1 to 20 carbon atoms, and the like. The alkylene group includes a methylene group, an ethylene group, a propylene group, a butylene group, a pentylene group, a hexylene group, a heptylene group, an octylene group, a nonylene group, a decylene group, a dodecylene group, a hexadecylene group, and the like. The alkanetriyl group includes a methanetriyl group, an ethanetriyl group, a propanetriyl group, a butanetriyl group, a pentanetriyl group, a hexanetriyl group, a heptanetriyl group, an octanetriyl group, a nonanetriyl group, a decanetriyl group, a dodecanetriyl group, a hexadecanetriyl group, and the like. The alkanetetrayl group includes a methanetetrayl group, a ethanetetrayl group, a propanetetrayl group, a butanetetrayl group, a pentanetetrayl group, a hexanetetrayl group, a heptanetetrayl group, an octanetetrayl group, a nonanetetrayl group, a decanetetrayl group, a dodecanetetrayl group, a hexadecanetatrayl group and the like. These aliphatic groups may be substituted. The substituent includes an alkyl group having 1 to 20 carbon atoms, an aryl group having 6 to 15 carbon atoms, a halogen atom, a nitro group, an amide group, a hydroxyl group, an ester group, an ether group, an

aldehyde group, and the like.

The alicyclic group includes a cycloalkylene group having 3 to 20 carbon atoms, a cycloalkanetriyl group having 3 to 20 carbon atoms, and a cycloalkanetetrayl group having 3 to 20 carbon atoms. The cycloalkylene group includes a cyclopropylene group, a cyclobutylene group, a cyclopentylene group, a cyclohexylene group, a cycloheptylene group, a cyclooctylene group, a cyclononylene group, a cyclodecylene group, a cyclododecylene group, a cyclohexadecylene group, and the like. The cycloalkanetriyl group includes a cyclopropanetriyl group, a cyclobutanetriyl group, a cyclopentanetriyl group, a cyclohexanetriyl group, a cycloheptanetriyl group, a cyclooctanetriyl group, a cyclononanetriyl group, a cyclodecanetriyl group, a cyclododecanetriyl group, a cyclohexadecanetriyl group, and the like. The cycloalkanetetrayl group includes a cyclopropanetetrayl group, a cyclobutanetetrayl group, a cyclopentanetetrayl group, a cyclohexanetetrayl group, a cycloheptanetetrayl group, a cyclooctanetetrayl group, a cyclononanetetrayl group, a cyclodecanetetrayl group, a cyclododecanetetrayl group, a cyclohexadecanetetrayl group, and the like. These alicyclic groups may be substituted. The substituent includes an alkyl group having 1 to 20 carbon atoms, an aryl group having 6 to 15 carbon atoms, a halogen atom, a nitro group, an amide group, a hydroxyl group, an ester group, an ether group, an aldehyde group, and the like.

The aromatic group includes an arylene group having 5 to 15 carbon atoms, an arenetriyl group having 5 to 15 carbon atoms, and an arenetetrayl group having 5 to 15 carbon atoms, each of which may contain a heteroatom to form a heterocyclic structure, The arylene group includes a phenylene group, a naphthalenediyl group, and the like. The arenetriyl group (trivalent) includes a benzenetriyl group, a naphthalenetriyl group, and the like. The arenetetrayl group (tetravalent) includes a benzenetetrayl group, a naphthalenetetrayl group, and the like. These aromatic groups may be substituted. The substituent includes an alkyl group having 1 to 20 carbon atoms, an aryl group having 6 to 15 carbon atoms, a halogen atom, a nitro group, an amide group, a hydroxyl group, an ester group, an ether group, an aldehyde group, and the like.

$X^1$ and $X^2$ each independently represent a divalent to tetravalent aliphatic group having 1 to 20 carbon atoms, a divalent to tetravalent alicyclic group having 3 to 20 carbon atoms, a divalent to tetravalent aromatic group having 5 to 15 carbon atoms, or a combination of these, each of which may contain a heteroatom or a substituent.

The aliphatic group includes an alkylene group having 1 to 20 carbon atoms, an alkanetriyl group having 1 to 20 carbon atoms, an alkanetetrayl group having 1 to 20 carbon atoms, and the like. The alkylene group includes a methylene group, an ethylene group, a propylene group, a butylene group, a pentylene group, a hexylene group, a heptylene group, an octylene group, a nonylene group, a decylene group, a dodecylene group, a hexadecylene group, and the like. The alkanetriyl group includes a methanetriyl group, an ethanetriyl group, a propanetriyl group, a butanetriyl group, a pentanetriyl group, a hexanetriyl group, a heptanetriyl group, an octanetriyl group, a nonanetriyl group, a decanetriyl group, a dodecanetriyl group, a hexadecanetriyl group, and the like. The alkanetetrayl group includes a methanetetrayl group, an ethanetetrayl group, a propanetetrayl group, a butanetetrayl group, a pentanetetrayl group, a hexanetetrayl group, a heptanetetrayl group, an octanetetrayl group, a nonanetetrayl group, a decanetetrayl group, a dodecanetetrayl group, a hexadecanetetrayl group, and the like. These aliphatic groups may be substituted. The substituent includes an alkyl group having 1 to 20 carbon atoms, an aryl group having 6 to 15 carbon atoms, a halogen atom, a nitro group, an amide group, a hydroxyl group, an ester group, an ether group, an aldehyde group, and the like.

The alicyclic group includes a cycloalkylene group having 3 to 20 carbon atoms, a cycloalkanetriyl group having 3 to 20 carbon atoms, and a cycloalkanetetrayl group having 3 to 20 carbon atoms. The cycloalkyleme group includes a cyclopropylene group, a cyclobutylene group, a cyclopentylene group, a cyclohexylene group, a cycloheptylene group, a cyclooctylene group, a cyclononylene group, a cyclodecylene group, a cyclododecylene group, a cyclohexadecylene group, and the like. The cycloalkanetriyl group includes a cyclopropanetriyl group, a cyclobutanetriyl group, a cyclopentanetriyl group, a cyclohexanetriyl group, a cycloheptanetriyl group, a cyclooctanetriyl group, a cyclononanetriyl group, a cyclodecanetriyl group, a cyclododecanetriyl group, a cyclohexadecanetriyl group, and the like. The cycloalkanetetrayl group includes a cyclopropanetetrayl group, a cyclobutanetetrayl group, a cyclopentanetetrayl group, a cyclohexanetetrayl group, a cycloheptanetetrayl group, a cyclooctanetetrayl group, a cyclononanetetrayl group, a cyclodecanetetrayl group, a cyclododecanetetrayl group, a cyclohexadecanetetrayl group, and the like. These alicyclic groups may be substituted. The substituent includes an alkyl group having 1 to 20 carbon atoms, an aryl group having 6 to 15 carbon atoms, a halogen atom, a nitro group, an amide group, a hydroxyl group, an ester group, an ether group, an aldehyde group, and the like.

The aromatic group includes an arylene group having 5 to 15 carbon atoms, an arenetriyl group having 5 to 15 carbon atoms, and an arenetetrayl group having 5 to 15 carbon atoms, each of which may contain a heteroatom to form a heterocyclic structure. The arylene group includes a phenylene group, a naphthalenediyl group, and the like. The arenetriyl group (trivalent) includes a benzenetriyl group, a naphthalenetriyl group, and the like. The arenetetrayl group (tetravalent) includes a benzenetetrayl group, a naphthalenetetrayl group, and the like. These aromatic groups may be substituted. The substituent includes an alkyl group having 1 to 20 carbon atoms, an aryl group having 6 to 15 carbon atoms, a halogen atom, a nitro group, an amide group, a hydroxyl group, an ester group, an ether group, an aldehyde group, and the like.

In the formulas (10-1) and (10-2), s and k are integers of 0 to 10, preferably integers of 0 to 3, and more preferably integers of 0 to 1. This is so because, if s and k exceed 10, the cyclic carbodiimide compound becomes difficult to synthesize and cases arise when the cost increases greatly. From these viewpoints, the integers are preferably selected in a range of 0 to 3. In addition, if s or k is 2 or more, $X^1$ or $X^2$ as a repeating unit may be different from other $X^1$ or $X^2$.

$X^3$ represents a divalent to tetravalent aliphatic group having 1 to 20 carbon atoms, a divalent to tetravalent alicyclic group having 3 to 20 carbon atoms, a divalent to tetravalent aromatic group having 5 to 15 carbon atoms, and a combination of these, each of which may contain a heteroatom or a substituent.

The aliphatic group includes an alkylene group having 1 to 20 carbon atoms, an alkanetriyl group having 1 to 20 carbon atoms, an alkanetetrayl group having 1 to 20 carbon atoms, and the like. The alkylene group includes a methylene group, an ethylene group, a propylene group, a butylene group, a pentylene group, a hexylene group, a heptylene group, an octylene group, a nonylene group, a decylene group, a dodecylene group, a hexadecylene group, and the like. The alkanetriyl group includes a methanetriyl group, an ethanetriyl group, a propanetriyl group, a butanetriyl group, a pentanetriyl group, a hexanetriyl group, a heptanetriyl group, an octanetriyl group, a nonanetriyl group, a decanetriyl group, a dodecanetriyl group, a hexadecanetriyl group, and the like. The alkanetetrayl group includes a methanetetrayl group, an ethanetetrayl group, a propanetetrayl group, a butanetetrayl group, a pentanetetrayl group, a hexanetetrayl group, a heptanetetrayl group, an octanetetrayl group, a nonanetetrayl group, a decanetetrayl group, a dodecanetetrayl group, a hexadecanetetrayl group, and the like. These aliphatic groups may be substituted. The substituent includes an alkyl group having 1 to 20 carbon atoms, an aryl group having 6 to 15 carbon atoms, a halogen atom, a nitro group, an amide group, a hydroxyl group, an ester group, an ether group, an aldehyde group, and the like.

The alicyclic group includes a cycloalkylene group having 3 to 20 carbon atoms, a cycloalkanetriyl group having 3 to 20 carbon atoms, and a cycloalkanetetrayl group having 3 to 20 carbon atoms. The cycloalkylene group includes a cyclopropylene group, a cyclobutylene group, a cyclopentylene group, a cyclohexylene group, a cycloheptylene group, a cyclooctylene group, a cyclononylene group, a cyclodecylene group, a cyclododecylene group, a cyclohexadecylene group, and the like. The cycloalkanetriyl group includes a cyclopropanetriyl group, a cyclobutanetriyl group, a cyclopentanetriyl group, a cyclohexanetriyl group, a cycloheptanetriyl group, a cyclooctanetriyl group, a cyclononanetriyl group, a cyclodecanetriyl group, a cyclododecanetriyl group, a cyclohexadecanetriyl group, and the like. The cycloalkanetetrayl group includes a cyclopropanetetrayl group, a cyclobutanetetrayl group, a cyclopentanetetrayl group, a cyclohexanetetrayl group, a cycloheptanetetrayl group, a cyclooctanetetrayl group, a cyclononanetetrayl group, a cyclodecanetetrayl group, a cyclododecanetetrayl group, a cyclohexadecanetetrayl group, and the like. These alicyclic groups may be substituted. The substituent includes an alkyl group having 1 to 20 carbon atoms, an aryl group having 6 to 15 carbon atoms, a halogen atom, a nitro group, an amide group, a hydroxyl group, an ester group, an ether group, an aldehyde group, and the like.

The aromatic group includes an arylene group having 5 to 15 carbon atoms, an arenetriyl group having 5 to 15 carbon atoms, and an arenetetrayl group having 5 to 15 carbon atoms, each of which may contain a heteroatom to form a heterocyclic structure. The arylene group includes a phenylene group, a naphthalenediyl group, and the like. The arenetriyl group (trivalent) includes a benzenetriyl group, a naphthalenetriyl group, and the like. The arenetetrayl group (tetravalent) includes a benzenetetrayl group, a naphthalenetetrayl group, and the like. These aromatic groups may be substituted. The substituent includes an alkyl group having 1 to 20 carbon atoms, an aryl group having 6 to 15 carbon atoms, a halogen atom, a nitro group, an amide group, a hydroxyl group, an ester group, an ether group, an aldehyde group, and the like.

Further, $Ar^1$, $Ar^2$, $R^1$, $R^2$, $X^1$, $X^2$, and $X^3$ may contain a heteroatom. Furthermore, when Q is a divalent linking group, $Ar^1$, $Ar^2$, $R^1$, $R^2$, $X^1$, $X^2$, and $X^3$ are all divalent linking groups. When Q is a trivalent linking group, one of $Ar^1$, $Ar^2$, $R^1$, $R^2$, $X^1$, $X^2$, and $X^3$ is a trivalent group. When Q is a tetravalent linking group, one of $Ar^1$, $Ar^2$, $R^1$, $R^2$, $X^1$, $X^2$, and $X^3$ is a tetravalent group or two thereof are trivalent groups.

As a cyclic carbodiimide used in the present invention, a compound represented by the following formula (14) is more preferable:

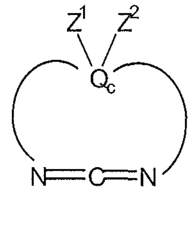

(14)

In the formula, $Q_c$ is a tetravalent linking group which includes an aliphatic group, an alicyclic group, an aromatic group, or a combination of these and may contain a heteroatom; $Z^1$ and $Z^2$ are carriers which support the cyclic structure; and $Z^1$ and $Z^2$ may be bound together to form a cyclic structure.

The aliphatic group, the alicyclic group, and the aromatic group are the same as explained in formula (10). However, in a compound represented by formula (14), $Q_c$ is tetravalent. Therefore, one of these groups is a tetravalent group or two thereof are trivalent groups. $Q_c$ is preferably a tetravalent linking group represented by the following formula (14-1), (14-2), or (14-3).

$$-Ar_c^1\left(O-X_c^1\right)_s O-Ar_c^2- \qquad (14\text{-}1)$$

$$-R_c^1\left(O-X_c^2\right)_k O-R_c^2- \qquad (14\text{-}2)$$

$$-X_c^3- \qquad (14\text{-}3)$$

$Ar_c^1$, $Ar_c^2$, $R_c^1$, $R_c^2$, $X_c^1$, $X_c^2$, $X_c^3$, s, and k are the same as $Ar^1$, $Ar^2$, $R^1$, $R^2$, $X^1$, $X^2$, $X^3$, s, and k in the formula (10-1), (10-2), and (10-3), respectively. However, one of $Ar_c^1$, $Ar_c^2$, $R_c^1$, $R_c^2$, $X_c^1$, $X_c^2$, and $X_c^3$ is a tetravalent group or two thereof are trivalent groups.

$Z^1$ and $Z^2$ are preferably each independently a single bond, a double bond, an atom, an atomic group, or a polymer. $Z^1$ and $Z^2$ are linking portions and a plurality of cyclic structures are bound though $Z^1$ and $Z^2$ to form a structure represented by the formula (14). As such a cyclic carbodiimide compound (14), the following compounds may be mentioned.

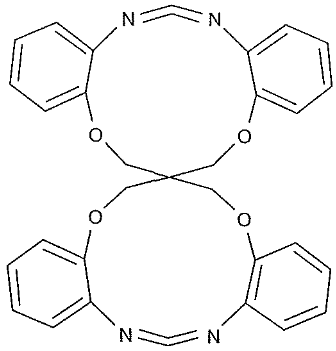

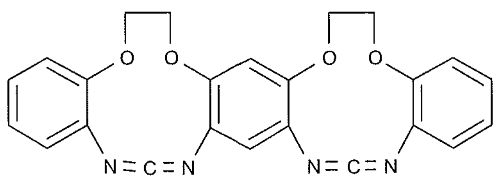

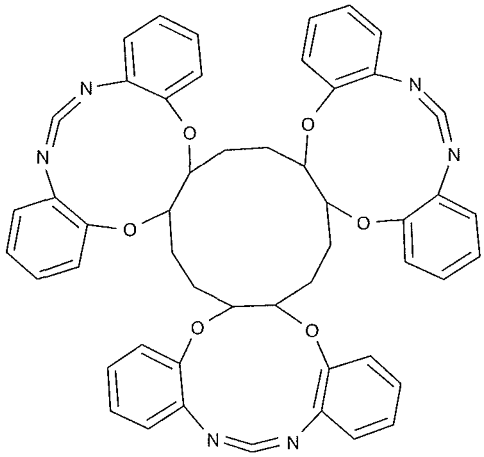

These cyclic carbodiimide compounds can be produced easily by reference to Production Examples of International Publication No. WO2010/071213.

As the epoxy compound, there may preferably be used a glycidyl ether compound, a glycidyl ester compound, a glycidylamine compound, a glycidylimide compound, a glycidylamide compound, and an alicyclic epoxy compound.

Examples of glycidyl ether compound include stearyl glycidyl ether, phenyl glycidyl ether, ethylene oxide lauryl alcohol glycidyl ether, ethylene glycol diglycidyl ether, polyethylene glycol diglycidyl ether, polypropylene glycol diglycidyl ether, neopentylene glycol diglycidyl ether, polytetramethylene glycol diglycidyl ether, glycerol triglycidyl ether, trimethylolpropane triglycidyl ether, and pentaerythritol tetraglycidyl ether; and, additionally, a bisphenol A diglycidyl ether-type epoxy resin obtained by a condensation reaction of bisphenols such as bis(4-hydroxyphenyl)methane and the like with epichlorohydrin. Among these, the bisphenol A diglycidyl ether-type epoxy resin is preferable. The example of glycidyl ester compound includes, for example, glycidyl benzoate, glycidyl stearate, glycidyl versatate, diglycidyl terephthalate, diglycidyl phthalate, diglycidyl cyclohexanedicarboxylate, diglycidyl adipate, diglycidyl succinate, diglycidyl dodecanedioate, tetraglycidyl pyromellitate, and the like. Among them, glycidyl benzoate and glycidyl versatate are preferable.

Examples of glycidylamine compound include tetraglycidylamine diphenylmethane, triglycidyl-p-aminophenol, diglycidylaniline, diglycidyltoluidine, tetraglycidylmetaxylenediamine, triglycidyl isocyanurate, and the like.

Examples of the glycidylimide and glycidylamide compounds include N-glycidylphthalimide, N-glycidyl-4,5-dimethylphthalimide, N-glycidyl-3,6-dimethylphthalimide, N-glycidylsuccinimide, N-glycidyl-1,2,3,4-tetrahydrophthalimide, N-glycidylmaleinimide, N-glycidylbenzamide, N-glycidylstearylamide, and the like. Among them N-glycidylphthalimide is preferable.

Examples of the alicyclic epoxy compound includes 3,4-epoxycyclohexyl-3,4-cyclohexylcarboxylate, bis(3,4-epoxycyclohexylmethyl) adipate, vinylcyclohexene diepoxide, N-methyl-4,5-epoxycyclohexane-1,2-dicarboxylic acid imide, N-phenyl-4,5-epoxycylohexane-1,2-dicarboxylic acid imide, and the like. Further, a polyepoxy compound which contains the above-mentioned compounds as monomer units, especially a polyepoxy compound having epoxy groups on side chains as pendant groups may also be mentioned as a suitable agent.

As other epoxy compounds, there may be used epoxy modified fatty acid glycerides such as an epoxidized soy oil, an epoxidized linseed oil, an epoxidized whale oil, and the like; and a phenol novolac-type epoxy resin, a cresol novolac-type epoxy resin, and the like.

The oxazoline compound includes 2-methoxy-2-oxazoline, 2-butoxy-2-oxazoline, 2-stearyloxy-2-oxazoline, 2-cyclohexyloxy-2-oxazoline 2-allyloxy-2-oxazoline, 2-benzyloxy-2-oxazoline, 2-p-phenylphenoxy-2-oxazoline, 2-methyl-2-oxazoline, 2-cyclohexyl-2-oxazoline, 2-methallyl-2-oxazoline, 2-crotyl-2-oxazoline, 2-phenyl-2-oxazoline, 2-o-ethylphenyl-2-oxazoline, 2-o-propylphenyl-2-oxazoline, 2-p-phenylphenyl-2-oxazoline, 2,2'-bis(2-oxazoline), 2,2'-bis(4-methyl-2-oxazoline), 2,2'-bis(4-butyl-2-oxazoline), 2,2'-m-phenylenebis(2-oxazoline), 2,2'-p-phenylenebis(4-methyl-2-oxazoline), 2,2'-p-phenylenebis(4,4'-methyl-2-oxazoline), 2,2'-ethylenebis(2-oxazoline), 2,2'-tetramethylenebis(2-oxazoline), 2,2'-hexamethylenebis(2-oxazoline), 2,2'-ethylenebis(4-methyl-2-oxazoline), 2,2'-tetramethylenebis(4,4'-dimethyl-2-oxazoline), 2,2'-cyclohexylenebis(2-oxazoline), 2,2'-diphenylenebis(4-methyl-2-oxazoline), and the like.

In the present invention, the poly(D-lactic acid) component comprises a D-lactic acid unit and preferably comprises from 90 to 100 mol% of D-lactic acid unit and from 0 to 10 mol% of copolymerizable unit other than D-lactic acid. Further, the poly(L-lactic acid) comprises a L-lactic acid unit and preferably comprises from 90 to 100 mol% of L-lactic acid unit and from 0 to 10 mol% of copolymerizable unit other than L-lactic acid.

In the foregoing, the amounts of the D-lactic acid unit and the L-lactic acid unit are selected in a range of more preferably from 95 to 100 mol% and even more preferably from 98 to 100 mol%.

The amount of the copolymerizale unit other than the L-lactic acid unit or the D-lactic acid unit is selected in a

range of preferably from 0 to 10 mol%, more preferably 0 to 5 mol%, and even more preferably from 0 to 2 mol%.

The copolymerizable unit may be exemplified by a unit derived from a dicarboxylic acid, a polyhydric alcohol, a hydroxycarboxylic acid, a lactone, and the like, having two or more functional groups which can form ester bonds; and a unit derived from a variety of polyesters, polyethers, polycarbonates, and the like, composed of these various components.

The dicarboxylic acid includes succinic acid, adipic acid, azelaic acid, sebacic acid, terephthalic acid, isophthalic acid, and the like. The polyhydric alcohol includes aliphatic polyhydric alcohols such as ethylene glycol, propylene glycol, butanediol, pentanediol, hexanediol, octanediol, glycerin, sorbitan, neopentyl glycol, diethylene glycol, triethylene glycol, polyethylene glycol, polypropylene glycol, and the like; or aromatic polyhydric alcohols such as ethylene oxide adducts of bisphenol and the like; and the like. The hydroxycarboxylic acid includes glycolic acid, hydroxybutyric acid, and the like. The lactone includes glycolide, ε-caprolactone, β-propiolactone, δ-butyrolactone, β- or γ-butyrolactone, pivalolactone, δ-valerolactone, and the like.

Poly(L-lactic acid) and poly(D-lactic acid) can be produced by a heretofore known method.

For example, these polymers can be produced by subjecting L-lactide or D-lactide to ring-opening polymerization in the presence of a metal-containing catalyst. Further, these polymers can also be manufactured by solid-phase polymerization of low-molecular weight polylactic acid containing a metal-containing catalyst after crystallization, if desired, or without crystallization under reduced pressure or under ordinary to increased pressure in the presence of or absence of an inert gas flow. Furthermore, these polymers can be produced by a direct polymerization process where lactic acid is subjected to dehydrocondensation in the presence or absence of an organic solvent.

The polymerization reaction can be carried out in a heretofore known reactor. For example, in the ring-opening polymerization or direct polymerization process, a vertical reactor or a horizontal reactor equipped with a blade for high-viscosity agitation such as a helical ribbon blade and the like may be used alone or in parallel. Also, the reactor may be any of batch-type, continuous-type, and semibatch-type reactors or a combination of these.

An alcohol may be used as a polymerization initiator. Such an alcohol is preferably nonvolatile without interfering with polymerization of polylactic acid. For example, there may be suitably used decanol, dodecanol, tetradecanol, hexadecanol, octadecanol, ethylene glycol, trimethylolpropane, pentaerythritol, and the like.

In a preferable embodiment, the low molecular weight polylactic acid (prepolymer) used in the solid-phase polymerization is crystallized beforehand from the viewpoint of preventing fusion of the resin pellets. The prepolymer is polymerized in a solid state in a temperature range of from the glass transition temperature to less than the melting point of the prepolymer in a fixed vertical or horizontal reactor or a reactor which rotates itself (rotary kiln and the like) such as a tumbler or a kiln.

The metal-containing catalyst is exemplified by an aliphatic acid salt, a carbonate salt, a sulfate salt, a phosphate salt, an oxide, a hydroxide, a halide, an alcoholate, and the like of alkali metals, alkaline earth metals, rare earth metals, transition metals, aluminum, germanium, tin, antimony, titanium, and the like. Among them, preferable are an aliphatic acid salt, a carbonate salt, a sulfate salt, a phosphate salt, an oxide, a hydroxide, a halide, and an alcoholate containing at least one metal selected from tin, aluminum, zinc, calcium, titanium, germanium, manganese, magnesium, and rare earth metals.

From the viewpoint of catalyst activity and a low extent of side reactions, the preferable catalyst may be exemplified by a tin compound, specifically a tin-containing compound such as stannous chloride, stannous bromide, stannous iodide, stannous sulfate, stannic oxide, tin myristate, tin octoate, tin stearate, tetraphenyltin, and the like.

Above all, there may be suitably exemplified a tin (II) compound, specifically diethoxy tin, dinonyloxy tin, tin (II) myristate, tin (II) octoate, tin (II) stearate, tin (II) chloride, and the like.

The amount of the catalyst used is, relative to 1 kg of lactide, from $0.42 \times 10^{-4}$ to $100\times10^{-4}$ (mole) and, further, in view of the reactivity, and color tone and stability of the polylactides obtained, preferably from $1.68\times10^{-4}$ to $42.1\times10^{-4}$ (mole), and especially preferably from $2.53\times10^{-4}$ to $16.8\times10^{-4}$ (mole).

The polymerization catalyst used in polymerization of lactic acid is preferably inactivated by a heretofore known deactivating agent before use in the production of polylactic acid.

Such a deactivating agent is exemplified, for example, by an organic ligand including a group consisting of chelating ligands having imino groups and being capable of coordinating to the metallic polymerization catalysts; low oxidation number phosphoric acid having the oxidation number of phosphorous being 5 or less including dihydridooxophosphoric (I) acid, dihydridotetraoxodiphosphoric (II,II) acid, hydridotrioxophophorus (III) acid, dihydridopentaoxodiphosphorous (III) acid, hydridopentaoxodiphosphoric (II, IV) acid, dodecaoxohexaphosphoric (III) acid, hydridooctaoxotriphosphoric (III, IV, IV) acid, octaoxotriphosphoric (IV, III, IV) acid, hydridohexaoxodiphosphoric (III, V) acid, hexaoxodiphosphoric (IV) acid, decaoxotetraphosphoric (IV) acid, hendecaoxotetraphosphoric (IV) acid, enneaoxotriphosphoric (V, IV, IV) acid, and the like; a compound represented by a formula $xH_2O•yP_2O_5$ including orthophosphoric acid wherein x/y = 3; polyphosphoric acid represented by the same formula wherein 2>x/y>1 and referred to, depending on the degree of condensation, as diphosphoric acid, triphosphoric acid, tetraphosphoric acid, pentaphosphoric acid, and the like, and a mixture thereof; metaphosphoric acid represented by the same formula wherein x/y = 1, above all, trimetaphosphoric

acid and tetrametaphosphoric acid; ultraphosphoric acid represented by the same formula wherein 1>x/y>0 and having a network structure having a remainig partial phosphoric pentoxide structure (sometimes, these may be collectively referred to as metaphosphoric acid-type compounds); and an acid salt of these acids, a partial or complete ester thereof with a monovalent alcohol, a polyvalent alcohol, or a polyalkylene glycol, and a phosphono-substituted short-chain aliphatic carboxylic acid derivative thereof; and the like.

From the viewpoint of catalyst deactivation activity, preferably used are a compound represented by the formula $xH_2O \cdot yP_2O_5$, including orthophosphoric acid wherein x/y=3; polyphosphoric acid represented by the same formula wherein 2>x/y>1 and referred to, depending on the degree of condensation, as diphosphoric acid, triphosphoric acid, tetraphosphoric acid, pentaphosphoric acid, and the like, and a mixture of these; metaphosphoric acid represented by the same formula wherein x/y=1, above all trimetaphosphoric acid and tetrametaphosphoric acid; ultraphosphoric acid represented by the same formula wherein 1>x/y>0 and having a network structure having a remaining partial phosphoric pentoxide structure (sometimes, these may be collectively referred to as metaphosphoric acid-type compounds); and an acidic salt of these acids, a partial ester thereof with a monovalent or polyvalent alcohol, or a polyalkyleneglycol, oxophosphoric acids or acidic esters thereof, a phosphono-substituted lower aliphatic carboxylic acid derivatives, and the above-mentioned metaphosphoric acid-type compounds are preferably used.

The metaphosphoric acid-type compounds used in the present invention include a cyclic metaphosphoric acid wherein 3 to ca. 200 phosphoric acid units are condensed, an ultra-region metaphosphoric acid having a three-dimensional network structure, or an alkali metal salt, an alkaline earth metal salt, and an onium salt thereof. Among them, preferably used are a sodium salt of cyclic metaphosphoric acid, a sodium salt of ultra-region metaphosphoric acid, dihexylphosphonoethyl acetate (hereinafter sometimes abbreviated as DHPA) which is a phosphono-substituted lower aliphatic carboxylic acid derivative, and the like.

The polylactic acid used in the present invention is preferably one containing lactide in an amount of from 1 to 5000 wt ppm. Lactide contained in the polylactic acid may degrade the resin during the melt processing, worsen the color tone, and in some cases make the resin useless as a product.

Although poly(L-lactic acid) and/or poly(D-lactic acid) usually contain 1 to 5 weight% of lactide immediately after melt ring opening polymerization, lactide may be decreased to a suitable range by a conventionally known lactide minimization method such as vacuum evaporation in a single- or multi-screw extruder, a high vacuum treatment in the polymerization apparatus, or the like which is carried out singly or in combination at any stage from completion of the polymerization of poly(L-lactic acid) and/or poly(D-lactic acid) to molding of the polylactic acid.

Although the lower the lactide content is, the more improved are the melt stability and hygrothermal stability of the resin, it is reasonable and economical to make the content fit to the desired purpose, considering an advantage of the lactide for lowering the melt viscosity of the resin. That is, it is reasonable to set the lactide content to a range of 1 to 1000 ppm where practical melt stability is achieved. A range of more preferably 1 to 700 ppm, even more preferably 2 to 500 ppm, and especially preferably 5 to 100 ppm is selected.

When the polylactic acid component contains lactide in such a range, the stability of polylactic acid during melt film-forming of the film of the present invention is improved, leading to an advantage of efficient production of the film, and improved hygrothermal stability and lower gas generating property.

The weight average molecular weight of polylactic acid used in the present invention is selected considering the relationship between moldability and mechanical and thermal properties of the molded article obtained. That is, the weight average molecular weight is preferably 80,000 or more, more preferably 100,000 or more, even more preferably 130,000 or more, in order for the composition to exhibit its mechanical and thermal properties such as strength, elongation, heat resistance, and the like. However, the melt viscosity of polylactic acid increases in an exponential manner with increase in the weight average molecular weight and, when melt film formation is performed, there may occur cases where the film-forming temperature has to be set higher than the heat resistant temperature of polylactic acid in order to keep the viscosity of polylactic acid within a moldable range.

Specifically, when film formation is carried out at a temperature exceeding 300°C, the polylactic acid film discolors due to thermal degradation of the resin and the film is very likely to become one of a low commercial value. Therefore, the weight average molecular weight of the polylactic acid composition is preferably 500,000 or less, more preferably 400,000 or less, and even more preferably 300,000 or less. Thus, the weight average molecular weight of polylactic acid is preferably from 80,000 to 500,000, more preferably from 100,000 to 400,000, and even more preferably from 130,000 to 300,000.

The ratio of the weight average molecular weight (Mw) to the number average molecular weight (Mn) is called a molecular weight distribution (Mw/Mn). A larger molecular weight distribution means that the proportion of larger and smaller molecules relative to the average molecular weight is high.

That is, for example, polylactic acid having a weight average molecular weight of about 250,000 and a molecular weight distribution of 3 or more sometimes contains a high proportion of molecules having a molecular weight of more than 250,000. In this case, the melt viscosity becomes high and is not preferable in the sense mentioned above. Further, in polylactic acid having a relatively small weight average molecular weight of about 80,000 and a large molecular weight

distribution, the proportion of molecules having molecular weights of less than 80,000 sometimes becomes high. In this case, durability of mechanical properties of the film becomes low, which is unfavorable for use. From such a viewpoint, the range of molecular weight distribution is preferably from 1.5 to 2.4, more preferably from 1.6 to 2.4, and even more preferably 1.6 to 2.3.

When stereocomplex polylactic acid is used as the polylactic acid composition of the present invention, it may be obtained, as mentioned above, by blending, preferably blending in a molten state, and more preferably by blending by melt kneading the poly(L-lactic acid) component and the poly(D-lactic acid) component in a weight ratio of from 10/90 to 90/10.

The temperature of blending the poly(L-lactic acid) component and the poly(D-lactic acid) component is selected in a range of from 220°C to 290°C, preferably from 220°C to 280°C, more preferably from 225°C to 275°C from the viewpoint of melt stability and improvement of the degree of stereocomplex crystallinity of the polylactic acid.

Although the melt kneading process is not particularly limited, a heretofore known batch or continuous melt kneading apparatus is suitably used. For example, there may be used a melting/stirring vessel; a single or twin screw extruder; a kneader; a no-screw basket-shaped stirring vessel; "Viborac" (registered trade name) manufactured by Sumitomo Heavy Industries, Ltd.; N-SCR manufactured by Mitsubishi Heavy Industries, Ltd.; a spectacle-shaped blade, a lattice blade, or a Kenix-type stirrer manufactured by Hitachi, Ltd.; or a tubular polymerization apparatus equipped with a Sulzer SMLX-type static mixer; and the like.

In order to accelerate formation of crystals of sterocomplex polylactic acid steadily and to a high degree, there may favorably be applied a method to blend a specific additive in the polylactic acid of the present invention to an extent which does not interfere with the gist of the present invention.

That is, for example, there may be mentioned Method (1) to add a phosphoric acid metal salt represented by the following formula (22) or (23) as a stereocomplex crystallization accelerator.

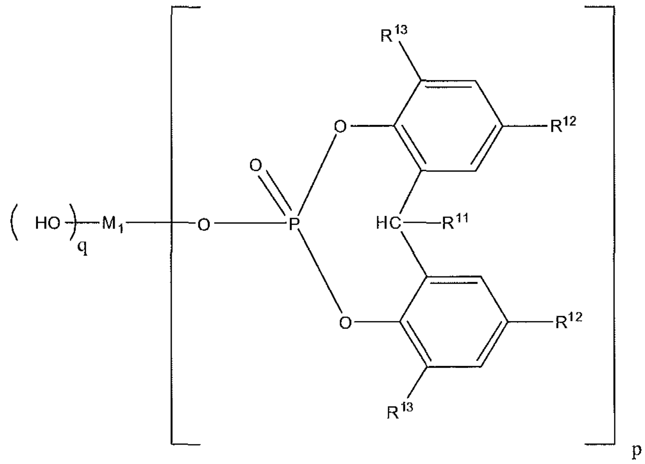

(22)

In the formula (22), $R^{11}$ represents a hydrogen atom or an alkyl group having 1 to 4 carbon atoms; $R^{12}$ and $R^{13}$ each independently represent a hydrogen atom or an alkyl group having 1 to 12 carbon atoms; $M_1$ represents an alkali metal atom, an alkaline earth metal atom, a zinc atom, or an aluminum atom; p represents 1 or 2; q represents 0 when $M_1$ is an alkaline metal atom, an alkaline earth metal atom, or a zinc atom, and 1 or 2 when $M_1$ is an aluminum atom.

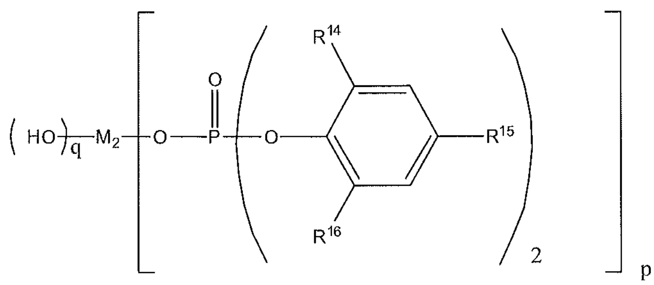

(23)

In the formula (23), $R^{14}$, $R^{15}$, and $R^{16}$ each independently represent a hydrogen atom or an alkyl group having 1 to 12 carbon atoms; $M_2$ represents an alkali metal atom, an alkaline earth metal atom, a zinc atom, or an aluminum

atom; p represents 1 or 2; q represents 0 when $M_2$ is an alkaline metal atom, an alkaline earth metal atom, or a zinc atom, and 1 or 2 when $M_2$ is an aluminum atom.

As $M_1$ and $M_2$ contained in the phosphoric acid salt represented by formula (22) or (23), there may be used preferably Na, K, Al, Mg, Ca, and Li; especially preferably K, Na, and Al, and Li; and, above all, most preferably Li and Al.

These phosphoric acid metal salts may be exemplified by "Adekastab" (registered trademark) NA-11, NA-71, and the like produced by ADEKA Corporation as suitable agents. It is preferable to use the phosphoric acid metal salt in an amount of from 0.001 to 2 weight%, preferably from 0.005 to 1 weight%, more preferably from 0.01 to 0.5 weight%, and even more preferably from 0.02 to 0.3 weight% relative to polylactic acid. When the amount is too small, the effect of the agent to increase the degree of stereocomplex crystallinity (S) is unfavorably small. When the amount is excessive, the melting point of the stereocomplex crystals is unfavorably lowered.

Furthermore, if desired, heretofore known crystal nucleating agents described in the following may be used in combination in order to enhance the effect of the phosphoric acid metal salt. Above all, calcium silicate, talc, kaolinite, and montmorillonite are favorably selected.

The amount of the crystal nucleating agent used is selected in the range of 0.05 to 5 weight%, preferably 0.06 to 2 weight%, more preferably 0.06 to 1 weight%, relative to polylactic acid.

Further, there may be employed Method (2) to add a crystallization aid [a compound having in the molecule at least one functional group selected from the group consisting of an epoxy group, an oxazoline group, an oxazine group, an isocyanate group, a ketene group, and a carbodiimide group (hereinafter, may be referred to as the specific functional group)].

Here, as the present inventors speculate, the stereocomplex crystallization aid is an agent the specific functional group of which reacts with the terminal groups of polylactic acid to partially connect poly(L-lactic acid) and poly(D-lactic acid), thus facilitating formation of the stereocomplex crystals.

As the stereocomplex crystallization aid, there may be suitably applied the following agents which are heretofore known as blocking agents for carboxyl terminal groups of polyesters. Among them, from the viewpoint of accelerating effect of formation of the stereocomplex crystals, preferably selected are carbodiimide compounds.

However, the stereocomplex crystallization aid, especially the one containing nitrogen poses a risk of deterioration of work environment due to bad smell and of worsening of the color tone of polylactic acid due to thermal decomposition of the agent. Thus, it is preferable not to use the crystallization aid and, when it is to be used, the occasion is preferably limited to a case where a high degree of stereocomplex crystal formation is emphasized and the amount used is preferably kept as small as possible.

The amount of the stereocomplex crystallization aid used is, on the same basis as above, selected in a range of 1 weight% or less, preferably from 0 to 0.5 weight%, more preferably from 0 to 0.3 weight%, and even more preferably from 0 to 0.1 weight%.

That is, the above-mentioned Method (1) is preferably applied singly and, when more emphasis is placed on the formation of the stereocomplex crystals, application thereof in combination with Method (2) is preferably selected.

In the present invention, the carboxyl terminal group concentration of polylactic acid is preferably from 0.01 to 10 equivalent/$10^6$ g (hereinafter, equivalent/$10^6$ g may sometimes be abbreviated as equivalent/ton). More preferably a range of 0.02 to 2 equivalent/ton and even more preferably a range of 0.02 to 1 equivalent/ton are suitably selected.

When the carboxyl terminal group concentration is in this range, excellent melt stability and hygrothermal resistance of polylactic acid can be obtained. To make the carboxyl terminal group concentration of polylactic acid 10 equivalent/ton or less, heretofore known methods to decrease the carboxyl terminal group concentration in polyester compositions can be applied. For example, the carboxyl group may be esterified or amidated by an alcohol or an amine, respectively, or, as mentioned above, a carbodiimide compound may be added.

In addition, the difference in the glass transition temperature (Tg1) of the stereocomplex polylactic acid composition and the glass transition temperature (Tg2) of the aromatic polyester containing the trimethylene-2,6-naphthalenedicarboxylate unit as the main repeating unit needs to be 20°C or less. If the difference in the glass transition temperature exceeds 20°C, uniform orientation cannot be provided at the time of stretching and, thus, homogeneity of the optical characteristics is impaired.

<Inert particles>

In order to improve wind-up property of the film, the oriented laminated film of the present invention preferably contains inert particles having an average particle size in a range of 0.01 μm to 2 μm at least in the outermost layer in an amount in a range of 0.001 weight% to 0.5 weight% based on the weight of the layer. If the average particle size of the inert particles is smaller than the lower limit or the content thereof is less than the lower limit, the effect of improving the wind-up property of the oriented laminated film tends to become insufficient. On the other hand, if the content of the inert particles exceeds the upper limit or the average particle size of the inert particles exceeds the upper limit, deterioration of the optical characteristics of the oriented laminated film due to the particles sometimes becomes prominent. The

average particle size of the inert particles is preferably from 0.02 μm to 1μm and especially preferably from 0.1 μm to 0.3 μm. Further, the content of the inert particles is preferably from 0.02 weight% to 0.2 weight%.

The inert particles to be contained in the oriented laminated film include, for example, inorganic inert particles such as silica, alumina, calcium carbonate, calcium phosphate, kaolin, and talc and organic inert particles such as silicone, cross-linked polystyrene, and a styrene-divinylbenzene copolymer. The particle shape is not particularly limited as long as it has a shape used ordinarily such as aggregated, spherical, or the like.

In addition, the inert particles may be contained in layers other than the outermost layer as long as the object of the present invention is achieved. For example, the particles may be contained in the inner layer composed of the same resin as the outermost layer.

<Oriented laminated film>

Generally in an optical interference film based on a multilayer structure, the optical interference film composed of layers having a layer thickness in a range of 0.05 to 0.5 μm and having different refractive indices shows a phenomenon called enhanced reflection depending on the difference in refractive indices of the layers, film thickness, and the number of laminations. In general, the reflection wavelength thereof is shown by the following equation:

$$\lambda = 2\ (n_1 \times d_1 + n_2 \times d_2)$$

(In the equation, $\lambda$ represents a reflection wavelength (nm); $n_1$ and $n_2$ represent the refractive indices of the respective layers; and $d_1$ and $d_2$ represent the thicknesses of the respective layers).

The oriented laminated film of the present invention comprises above-mentioned Layer A and Layer B laminated alternately and generates reflection by optical interference based on the difference in refractive indices of Layer A and Layer B. Here, by increasing the number of laminations to, for example, 11 layers or more, light reflectivity of the oriented laminated film can be increased. The number of laminations is preferably 51 layers or more, more preferably 101 layers or more, especially preferably 201 layers or more, and most preferably 251 layers or more.

As the number of laminations increases, selective reflection by multiple interference becomes large and reflectivity can be increased. However, the upper limit of the number of laminations had better be set at 2001 layers or less from the viewpoint of productivity, film handling property, reflection characteristics of the oriented film obtained, and the like. The upper limit of the number of lamination may be decreased from the viewpoint of productivity and handling property as long as the desired reflection characteristics can be obtained. For example, the upper limit may be 1001 layers or 801 layers.

In addition, Layer B is preferably laminated as the outermost layer of the laminated film and made to function also as a protective layer of the oriented laminated film. Thus, the total number of laminations in the oriented laminated film becomes an odd number because the total number of Layer B is 1 layer more than the total number of Layer A.

Further, while the wavelength reflected by the oriented laminated film of the present invention is ordinarily determined by the refractive index, the number of the layers, and the layer thickness, only a specific wavelength can be reflected when each of the laminated Layer A and Layer B laminated has a constant thickness. Therefore, in order to make the range of reflection wavelength wider, the thickness of each of Layer A and Layer B inside the oriented laminated film may be gradually increased.

The respective maximum layer thickness and minimum layer thickness in the Layer A and the Layer B can be determined based on photographs taken by using a transmission electron microscope.

The thicknesses of Layer A and Layer B may change in a stepwise manner in the direction of thickness of the oriented laminated film or they may change continuously. These changes in each of the laminated Layer A and Layer B make it possible for the film to reflect light of a wide range of wavelength, for example, from 400 to 800 nm which corresponds to the whole visible light range.

However, by keeping the thickness of each layer in a range of 0.05 to 0.5 μm, an oriented laminated film can be obtained which reflects light in the near-ultraviolet, visible, and near-infrared region. When the thickness is less than 0.05 μm, the reflected wavelength falls in an ultraviolet region and, due to absorption thereof by the polymer, no reflective performance is exhibited. When the thickness exceeds 0.5 μm, no reflective performance is exhibited in the infrared region due to infrared light of the polymer.

The method to obtain such a film having variations in the layer thickness includes a method where, for example, in laminating a resin for Layer A and a resin for Layer B alternately, a multilayer feedblock device is used, wherein the thicknesses of the flow channels of the feedblock is varied continuously. Further, as another method, there is a method in which layers of uniform thickness are laminated by the multilayer feedblock device and the laminated flowable material is, for example, divided into a plurality of portions of different widths vertically relative to the laminated surface and

thereafter the divided layers are laminated again in such a way that they become the same width. There may also be employed a method where these two methods are combined.

Furthermore, the oriented laminated film of the present invention may contain a thick layer exceeding 0.5 μm in addition to the Layer A and Layer B as a surface layer or an inner layer of the oriented laminated film. By including a layer of such thickness as a part of the alternately laminated structure of Layer A and Layer B, it becomes easy to adjust the layer thickness of Layer A and Layer B without affecting the reflecting performance. Such a thick layer may have the same composition with either of Layer A and Layer B, or it may partially contain these compositions. Because of its large thickness, it does not contribute to reflection characteristics. On the other hand, since the thick layer may affect the transmitting polarized light, when particles are contained in the layers, the amount thereof is preferably in the range of the particle concentration mentioned previously.

The thickness of the oriented laminated film of the present invention is, in view of the handling property and the like, preferably from 15 μm to 150 μm and more preferably from 30 μm to 100 μm.

In addition, in the oriented laminated film of the present invention, there are cases where inert particles are not contained. In such cases, it is desirable to install an easy-slip coating layer at least on one surface in the fabrication process of the oriented laminated film. To the composition which constitutes the coating layer, it is desirable to add a lubricating agent (filler or wax) in order to provide a polyester resin composition or an acrylic resin composition with an easy-slip property. By addition of the lubricating agent, a lubricating property and blocking resistance can be further improved.

Coating of an aqueous coating fluid on the oriented laminated film can be carried out at any stage but is preferably performed during the production process of the oriented laminated film. Further, the coating is preferably performed on a film before oriented crystallization is complete. Here, the "film before oriented crystallization is complete" includes an unstretched film, a uniaxially oriented film obtained by orienting the unstretched film in either of the longitudinal direction and the lateral direction, and a film stretch-oriented at a low stretch ratio in two directions including the longitudinal direction and the lateral direction (a biaxially stretched film before completing oriented crystallization by final restretching in the longitudinal direction as well as the lateral direction), and the like. Among them, it is preferable to coat the aqueous coating fluid of the above-mentioned composition on the unstretched film or the uniaxially oriented film oriented in one direction and to directly carry out longitudinal stretching and/or lateral stretching and heat setting.

When coating the aqueous coating fluid on the film, it is preferable that, as a pretreatment to improve coatability, the film is provided with a physical treatment such as a corona surface treatment, a flame treatment, a plasma treatment, and the like. Or it is preferable to use a surfactant together with the composition, the surfactant being chemically inactive therewith. Such a surfactant facilitates wetting of the polyester film with the aqueous coating fluid and includes, for example, anion-type or nonion-type surfactants such as polyoxyethylene alkylphenyl ethers, polyoxyethylene fatty acid esters, sorbitan fatty acid esters, glycerin fatty acid esters, fatty acid metal soaps, alkylsulfate salts, aklylsulfonate salts, alkylsulfosuccinate salts, and the like. The surfactant is preferably contained in the composition which forms the coating film in a range of 1 to 10 weight%.

The amount of the coating fluid applied is preferably such that the thickness of the coated film falls in a range of 0.02 to 0.3 μm and preferably 0.07 to 0.25 μm. If the film thickness is too small, adhesive force becomes insufficient. Conversely, if the film thickness is too large, there is a possibility that blocking occurs or the haze value increases.

As a coating method, any heretofore known method may be applied. For example, a roll coating method, a gravure coating method, a roll brush method, a spray coating method, an air knife coating method, a dip coating method, a curtain coating method, and the like may be used singly or in combination. Further, as needed, the coating film may be formed on one surface or on both surfaces of the film.

<Characteristics of oriented laminated film>

The oriented laminated film of the present invention is preferably one having, in the reflectivity curve for light having a wavelength of 400 to 1,600 nm, a reflection peak having the maximum reflectivity at least 20% higher than the baseline of the reflectivity, more preferably one having a reflection peak having the maximum reflectivity at least 30% higher, and especially preferably one having a reflection peak having the maximum reflectivity at least 50% higher than the baseline of the reflectivity

Figure 1 is a graph showing the reflectivity curve of an oriented laminated film obtained according to the operations in Example 2. In the figure, reference numerals 1, 2, and 3 represent the maximum reflectivity (the maximum peak), the baseline (the minimum value) of reflectivity, and the difference between the maximum reflectivity and the base line of the reflectivity (the maximum peak height), respectively.

When there is a reflection peak having the maximum reflectivity at least 20% higher than the baseline of the reflectivity, the film can be suitably used as an optical interference film which selectively reflects or transmits light of a specific wavelength. For example, it can be used as a mirror film.

Further, in the oriented laminated film of the present invention, both the resin which constitutes Layer A and

the resin which constitutes Layer B show crystallinity. Therefore, treatments such as stretching and the like hardly produce non-uniformity and, as a result, the thickness irregularity of the film can be decreased. As to the range of this thickness irregularity, the difference between the maximum value and the minimum value of the film thickness in an area (400 $mm^2$), which is the result of consideration of an area where optical effects can be exerted, is preferably less than 5 $\mu$m. This is more preferably less than 3 $\mu$m and even more preferably less than 1.5 $\mu$m. If the range of variation in the film thickness becomes 5 $\mu$m or larger, the color of reflected light changes and appears as color irregularity.

Furthermore, in the oriented laminated film of the present invention, the strength at break in each direction of the stretching treatment is preferably 150 MPa or more. If the strength at break is less than 150 MPa, there arises a risk of aggravating the handling property of the laminated film during fabrication or deteriorating the durability of the product.

In addition, if the strength at break is 150 MPa or more, the film becomes more resilient with an additional advantage that the wind-up property of the film is improved. In the case of biaxially oriented laminated film, the strength at break is, in the longitudinal direction, 200 MPa or more and especially preferably 250 MPa or more; and, in the lateral direction, preferably 200 MPa or more and especially preferably 250 MPa or more. Further, the ratio of the strength at break in the longitudinal direction to that in the lateral direction is preferably 3 or less because, in that range, the film can possess sufficient tear resistance. Especially, it is preferable that the ratio of the strength at break in the longitudinal direction to that in the lateral direction is 2 or less, because the tear resistance can be improved more. The upper limit of the strength at break is not particularly restricted but, from the viewpoint of maintaining stability during the stretching process, it is preferably at most 500 MPa.

Furthermore, in the oriented laminated film of the present invention, thermal dimensional stability can be especially improved by using the streocomplex polylactic acid resin of high thermal resistance and, above all, in the fabrication process, the film can sufficiently respond to a case where high temperature of 120°C or more is required. The percentages of thermal shrinkage of this film in the directions of stretching treatment (the film-forming direction and the width direction) are, when treated at 120°C for 30 minutes, preferably 2.0% each or less. It is more preferably 1.5% each or less and even more preferably 1.0% each or less.

<Method for producing oriented laminated film>

Hereinafter, the method for producing the oriented laminated film of the present invention will be described.

To obtain the oriented laminated film of the present invention, an aromatic polyester (the resin for Layer A) containing trimethylene-2,6-nephthalenedicarboxylate unit as the main repeating unit and a stereocomplex polylactic acid composition (the resin for Layer B) are extruded in a molten and overlapping state to obtain a laminated unstretched film (a process to fabricate a sheet-like material). In this case, when the laminate film is to be composed of 3 or more layers, the thickness of each layer may be uniform or the layers may be laminated so that the thickness changes in a stepwise manner or continuously in the direction of the film thickness.

The thus obtained laminated unstretched film is stretched in the film-forming direction and in the width direction which bisects the former at a right angle. The stretching temperature is preferably in a range of from the glass transition temperature (Tg) of the stereocomplex polylactic acid composition to Tg + 50°C. In this case, the stretching ratio is preferably 2 to 6, more preferably 2.5 to 5, and even more preferably 3 to 4. The larger stretching ratio is preferable because variations in the surface direction of individual layers in Layer A and Layer B become small due to thinning of the layers by stretching, light interference of the oriented laminated film becomes uniform in the surface direction, and the difference in refractive indices between Layer A and Layer B in the stretching direction and the difference in refractive indices of the laminated oriented film in the thickness direction become larger. In this case, as the stretching method, there may be used a publicly known stretching method such as hot stretching by means of a rod heater, hot roll stretching, tenter stretching, and the like. However, from the viewpoint of decreasing scratches on the film caused by contact with the roll, the stretching speed, and the like, the tenter stretching is preferable. Also, it is preferable to further provide a heat setting treatment after stretching.

Furthermore, as the stretching method, only the uniaxial stretching may suffice and, in this case, a uniaxially oriented film is obtained. In the case of the uniaxial stretching, the difference in the refractive index in the direction of the muximum in-plane refractive index between Layer A and Layer B becomes extremely large; and, on the other hand, the difference in the refractive index in the direction of the minimum in-plane refractive index between Layer A and Layer B becomes extremely small. As a result, agreement or disagreement of refractive indices between the layers becomes different depending on the in-plane direction of the film and it becomes possible to control reflectivity according to the direction of vibration of incident polarized light. If such a light polarization effect is not particularly needed, it is preferable to produce the film of the present invention by biaxial stretching, since there is little anisotropy in the film strength and a higher strength is easily obtained.

[Examples]

Hereinafter, the present invention will be described more specifically with reference to Examples. However, the present invention is not limited in any way by these Examples. In addition, each value in the present Examples was obtained according to the following methods.

(1) Melting point (Tm) and glass transition temperature (Tg) of thermoplastic resin and film:

A polymer sample or a film sample (10 mg each) was taken and the melting point and the glass transition temperature (Tg) thereof were measured by using DSC (manufactured by TA Instruments, trade name: DSC 2920) at a temperature increase rate of 20°C/min.

(2) Identification of thermoplastic resin and quantification of copolymer components and each component thereof:

Each layer of the film sample was measured by $^1$H-NMR to identify the components of the thermoplastic resin, and to quantify the components of the copolymer components and each component.

(3) Weight average molecular weight (Mw) and number average molecular weight (Mn) of polymer:

The weight average molecular weight and the number average molecular weight of a polymer were measured by gel permeation chromatography (GPC) and calibrated against a standard polystyrene. The GPC measuring instrument used was equipped with a detector [differential refractometer RID-6A (manufactured by Shimadzu Corporation)] and a column [one prepared by connecting TSK gel G3000HXL, TSK gel G4000HXL, TSK gel G5000HXL, and TSK guard column HXL-L manufactured by Tosoh Corporation in series; or one prepared by connecting TSK gel G2000HXL, TSK gel G3000HXL, and TSK guard column HXL-L manufactured by Tosoh Corporation in series].

The measurement was performed using chloroform as an eluent at a temperature of 40°C and a flow rate of 1.0 ml/min, wherein a 10 μl sample at a concentration of 1 mg/ml (chloroform containing 1% hexafluoroisopropanol) was injected.

(4) Measurement of the degree of stereocomplex crystallinity [S (%)], temperature of crystal melting, and the like by DSC:

Glass transition temperature (Tg), melting point of the polylactic acid crystals in the sterocomplex phase ($Tm_{sc}$), crystallization temperature of polylactic acid in the sterocomplex phase ($Tc_{sc}$), melting enthalpy of polylactic acid crystals in the stereocomplex phase ($\Delta Hm_{sc}$), melting enthalpy of polylactic acid crystals in the homo phase ($\Delta Hm_h$), and crystallization heat ($\Delta H_c$) were measured using DSC (trade name "Q 10," manufactured by TA Instruments) in the first cycle by increasing the temperature up to 260°C at a rate of 20°C/min under a nitrogen flow.

The degree of stereocomplex crystallinity (S) is a value determined according to the following equation (I) from the melting enthalpies of the polylactic acid crystals in the stereocomplex phase and in the homo phase:

$$(S) = [\Delta Hm_{sc} \ / (\Delta Hm_h + \Delta Hm_{sc})] \times 100 \qquad (I)$$

(In the equation, $\Delta Hm_{sc}$ is the melting enthalpy of polylactic acid crystals in the stereocomplex phase and $\Delta Hm_h$ is the melting enthalpy of polylactic acid crystals in the homo phase.)

(5) Thickness of each layer

A film sample was cut out in a size of 2 mm and 2 cm in the longitudinal direction and in the width direction of the film, respectively, fixed in an embedding capsule, and embedded with an epoxy resin ("Epomount" produced by Refine Tech Co., Ltd.). The embedded sample was cut vertically in the film width direction by means of a microtome ("ULTRACUT" (registered trade mark) UCT, manufactured by Leica Microsystems) to obtain a thin-film slice having a thickness of 5 nm. This was observed and photographed by using a transmission electron microscope ("S-4300" manufactured by Hitachi High-Technologies Corp.) operated at an acceleration voltage of 100 kV and the thickness of each layer was measured from the photograph.

Further, based on the thickness of each layer obtained, the ratio of the maximum layer thickness relative to the minimum layer thickness in Layer A and the same ratio in Layer B were determined independently.

Furthermore, based on the thickness of each layer obtained, the average layer thickness of Layer A and Layer

B were obtained independently, and a ratio of the average layer thickness of Layer B relative to that of Layer A was determined.

In addition, when there were adjustment layers having a thickness exceeding 0.5 μm present as the outermost layer or between the alternately laminated layers, they were omitted from Layer A or Layer B.

(6) Total film thickness

A film sample was pinched by a spindle detector (K107C manufactured by Anritsu Corporation) and its thickness was measured at 10 different points by means of a digital differential electronic micrometer (K351 manufactured by Anritsu Corporation). The average value was determined and taken as the film thickness.

(7) Refractive index of laminated film in each direction before and after stretching

The respective resins which constitute each layer were molten, extruded from a die, and cast on a casting drum to prepare the respective films. Further, the films obtained were stretched 5 times in a uniaxial direction at 135°C to obtain stretched films. The cast films and the stretched films were measured for respective refractive indices in the stretching direction (direction X), a direction (direction Y) orthogonal thereto, and the thickness direction (direction Z) (referred to as nMD, nTD, and nZ, respectively) by using a prism coupler manufactured by Metricon Co., Ltd. at a wavelength of 633 nm and were taken as refractive indices before and after stretching. The average refractive index of each layer before stretching was obtained as the average value of refractive indices in three directions before stretching.

(8) Measurement of melting point and crystallization peak of film by DSC

A film sample of 10 mg was taken and the crystallization temperature and melting point were measured by a DSC instrument (trade name: DSC2920 manufactured by TA Instruments) at a temperature increase rate of 20°C/min.

(9) Optical characteristics (peak wavelength, maximum reflectivity, and total light transmittance)

By using a spectrophotometer UV-3101PC manufactured by Shimadzu Corporation, the total amount of transmitted light and the amount of scattered light were measured according to JIS K7105:1981, Method A; and total light transmittance, diffused transmittance, and parallel light transmittance as the difference between these values were determined: The measurement conditions included scanning speed, 200 nm/sec; slit width, 20 nm; and sampling pitch, 2.0 nm. The standard white plate used was made of barium sulfate. Transmittance was measured in a wavelength range of 400 nm to 1600 nm and the difference from 100% transmittance for a blank was determined as the reflectivity. The highest among these reflectivity values was taken as the maximum reflectivity. As for the reflected wavelength, the values of shorter and longer wavelengths corresponding to half the maximum reflectivity were determined and the average value thereof was taken as the reflected wavelength.

In addition, in a reflectivity curve where the reflectivity obtained is plotted in a graph with reflectivity as the vertical axis and the wavelength as the horizontal axis, a line parallel to the horizontal axis of the graph was drawn at a point where the reflectivity was at minimum and was taken as the baseline.

(10) Mechanical characteristics (strength at break and elongation at break)

Strength at break in the film-forming direction was obtained as follows: a sample film was cut out in a size of 10 mm and 150 mm in sample width (width direction) and length (in a film-forming direction), respectively, and was pulled by an Instron-type universal tensile testing machine with a distance between chucks of 100 mm, a tensile speed of 100 mm/min, and a chart speed of 500 m/min. The strength at break was determined from the load-elongation curve.

Further, the strength at break in the width direction was obtained in a similar manner as in the measurement of the strength at break in the film-forming direction except that the sample film was cut out in a size of 10 mm and 150 mm in sample width (film-forming direction) and length (in a width direction), respectively. Elongation at break was determined in a similar manner.

(11) Thermal characteristics (thermal shrinkage ratio at 90°C and 120°C)

A film was kept in an oven set at the temperature of 90°C or 120°C for 30 minutes without tension and the change in dimensions before and after the heat treatment was calculated as a thermal shrinkage ratio according to the following equation:

$$\text{Thermal shrinkage ratio (\%)} = ((L_0 - L_1) / L_0) \times 100$$

In the equation, $L_0$ and $L_1$ represent the distance between reference points before the thermal treatment and after the thermal treatment, respectively.

(12) Range of thickness fluctuation

A film sample cut out in a size of 1 m×1 m in the film-forming direction and the width direction, respectively, was further cut out into 25 pieces, each having a 2 cm width, along the longitudinal direction and the width direction, respectively. The thickness of each sample was measured continuously by using an electronic micrometer and a recorder (K-312A and K-310B manufactured by Anritsu Corporation). Further, the measurement points were segmentalized into 200 mm intervals and among these points, the maximum value and the minimum value of thickness were read and the difference between them was taken as the range of thickness fluctuation.

(13) Practical characteristics (color irregularity)

Prepared were 10 pieces of sample film of A4 size (297 mm × 210 mm). Each sample film was overlapped on a white plain paper and, under illumination of 30 lux, was evaluated visually (naked eye) for irregularity in hue of reflected color in the sample film.
Further, prepared were 10 pieces of sample film of A4 size (297 mm × 210 mm). Each sample film was sprayed black on the rear surface and thereafter, under illumination of 30 lux, was evaluated visually (naked eye) for irregularity in hue of reflected color in the sample film.
Then, irregularities in the hue of transmitted color and the reflected color were taken together and judged according to the following evaluation criteria:

"Excellent": there is no visually observable hue irregularity in the sample;
"Good": there are some portions in the sample where the hue is different; and
"Poor": the hue irregularity can be observed clearly as mottles and lines.

[Production Example 1]

(1) Production ofpoly(L-lactic acid) (PLLA1)

To 100 weight parts of L-lactide (produced by Musashino Chemical Laboratories, Ltd.; optical purity, 100%) was added 0.005 weight part of tin octoate and the mixture was reacted in a reactor equipped with a stirring blade at 180°C for 2 hours under a nitrogen atmosphere. After adding phosphoric acid to the reaction mixture in an amount of 1.2 equivalent times relative to the tin octoate, the residual lactide was removed under reduced pressure of 13.3 Pa and the residue was made into chips to obtain poly(L-lactic acid) (PLLA1). The poly(L-lactic acid) (PLLA1) obtained had a weight average molecular weight of 152,000, a glass transition temperature (Tg) of 62°C, and a melting point of 175°C.

(2) Production of poly(D-lactic acid) (PDLA1)

Except that L-lactide was changed to D-lactide (produced by Musashino Chemical Laboratories, Ltd.; optical purity, 100%), polymerization was carried out under the same conditions as in production of PLLA 1 to obtain poly(D-lactic acid) (PDLA1). The poly(D-lactic acid) (PDLA1) obtained had a weight average molecular weight of 151,000, a glass transition temperature of 62°C, and a melting point of 175°C.

(3) Production of stereocomplex polylactic acid (SCPLA1)

Aliquots of 50 weight part each of PLLA1 and PDLA1 obtained by the above operations and 0.1 weight part of a phosphoric acid metal salt ("ADEKASTAB" (registered trademark) NA-71 produced by ADEKA Corporation) were fed into a twin-screw kneader from the first feed port and the mixture was melt-kneaded at a cylinder temperature of 250°C to obtain stereocomplex polylactic acid (SCPLA1). The polymer had a glass transition temperature (Tg) of 62°C, a melting point of 216°C, and the degree of stereocomplex crystallinity of 100%.

[Example 1]

Using aliquots of polytrimethylene-2,6-naphthalate having a melting point of 205°C and an intrinsic viscosity (measured in orthochlorophenol at 35°C) of 0.52 for Layer A and SCPLA1 obtained by operations in Production Example 1 as a stereocomplex polylactic acid composition for Layer B, each was dried by keeping at 160°C for 3 hours (polytrimethylene-2,6-naphthalate) and at 100°C for 4 hours (the stereocomplex polylactic acid composition). Thereafter, they were fed to extruders and heated to 240°C to form molten state. After polytrimethylene-2,6-naphthalate for Layer A was divided into 100 layers and the stereocomplex polylactic acid composition for Layer B was divided into 101 layers, they were laminated by using a multilayer feedblock device capable of laminating Layer A and Layer B alternately. Keeping this laminated state, the stereocomplex polylactic acid composition (SCPLA1) was supplied from a third extruder to further laminate protective layers on both surfaces of the molten material composed of a total of 201 layers in a laminated state. The feed of the third extruder was adjusted so that the protective layers accounted for 20% of the total. The resultant molten laminate was guided as-is to a die and cast on a casting drum to prepare an unstretched laminated sheet consisting of a total of 201 layers (the protective layers were not counted), wherein Layer A and Layer B were alternately laminated so that the thickness of each layer became equal.

In this case, the amounts of Layer A and Layer B extruded were adjusted so that they became 1:1 and lamination was carried out so that the surface layers were formed by Layer B. This multilayer unstretched film was stretched 3.0 times in the film-forming direction at a temperature of 60°C and further stretched 3.0 times in the width direction at a temperature of 65°C. This was heat-set at 180°C for 3 seconds to obtain a biaxially oriented laminated film having a thickness of 33 μm. The biaxially oriented laminated film obtained was one having excellent uniformity without lines due to uneven lamination and without irregularities attributable to stretching. The physical properties of the biaxially oriented multilayer laminated film obtained are shown in Table 3 and Table 4.

[Example 2]

Using aliquots of polytrimethylene-2,6-naphthalate having a melting point of 205°C and an intrinsic viscosity (measured in orthochlorophenol at 35°C) of 0.52 for Layer A and SCPLA1 obtained by operations in Production Example 1 as a stereocomplex polylactic acid composition for Layer B, each was dried by keeping at 160°C for 3 hours (polytrimethylene-2,6-naphthalate) and at 100°C for 4 hours (the stereocomplex polylactic acid composition). Thereafter, they were fed to extruders and heated to 240°C to form molten state. After polytrimethylene-2,6-naphthalate for Layer A was divided into 137 layers and the stereocomplex polylactic acid composition for Layer B was divided into 138 layers, they were laminated to obtain a molten material composed of a total of 275 layers where First Layer and Second Layer were laminated alternately by using a multilayer feedblock device capable of laminating First Layer and Second Layer alternately and capable of changing the maximum layer thickness and the minimum layer thickness in each of First Layer and Second Layer continuously up to a maximum/minimum ratio of 2.2. Keeping the laminated state, the same stereocomplex polylactic acid composition as one for Layer B was guided from a third extruder to a three-layer die to further laminate protective layers on both surfaces of the molten material consisting of a total of 275 layers in a laminated state. The feed of the third extruder was adjusted so that the protective layers accounted for 20% of the total. The molten laminate was guided as-is to a die and was cast on a casting drum, with the ratio of the average layer thickness of the first layer and the second layer having been adjusted to 1.0 : 2.6 to prepare an unstretched laminated film consisting of a total of 275 layers (the protective layers were not counted).

This laminated unstretched film was stretched 3.0 times in the film-forming direction at a temperature of 60°C and further stretched 3.0 times in the width direction at a temperature of 65°C. This was heat-set at 180°C for 3 seconds to obtain a biaxially oriented laminated film having a thickness of 41 μm. The biaxially oriented laminated film obtained was one having excellent uniformity without lines due to uneven lamination and without irregularities attributable to stretching. The physical properties of the biaxially oriented multilayer laminated film obtained are shown in Table 3 and Table 4. Further, the reflectivity curve is shown in Figure 1.

[Example 3]

Except that polytrimethylene-2,6-naphthalate having a melting point of 205°C and an intrinsic viscosity (measured in orthochlorophenol at 35°C) of 0.52 was used for Layer A and PDLA1 obtained by operations in Production Example 1 was used as a stereocomplex polylactic acid composition for Layer B, and that the temperature of heat-setting treatment was changed to 150°C, operations were carried out in a similar manner as in Example 1 to obtain a biaxially oriented laminated film having a thickness of 33 μm. The biaxially oriented laminated film was one having excellent uniformity without lines due to uneven lamination and without irregularities attributable to stretching. The physical properties of the biaxially oriented multilayer laminated film obtained are shown in Table 3 and Table 4.

[Example 4]

Except that stretching in the width direction was not performed, operations were carried out in the same manner as in Example 1 to obtain a uniaxially oriented laminated film. The uniaxially oriented laminated film obtained was one having excellent uniformity without lines due to uneven lamination and without irregularities attributable to stretching. In addition, when linearly polarized light was irradiated vertically on this film by using a polarizing plate, it became clear that reflectivity changed significantly depending on the direction of the incident polarized light.

[Comparative Example 1]

Using aliquots of polyethylene terephthalate having a melting point of 256°C and an intrinsic viscosity (measured in orthochlorophenol at 35°C) of 0.60 as a resin for Layer A and the stereocomplex polylactic acid used in Example 1 as a resin for Layer B, each was dried by keeping at 170°C for 3 hours (polyethylene terephthalate) and at 100°C for 4 hours (the stereocomplex polylactic acid composition). Thereafter, they were fed to extruders and heated to 280°C to form molten state. After polyethylene terephthalate for Layer A was divided into 100 layers and the stereocomplex polylactic acid composition for Layer B was divided into 101 layers, they were laminated by using a multilayer feedblock device capable of laminating Layer A and Layer B alternately. Keeping this laminated state, the sterocomplex polylactic acid composition (SCPLA1) was further fed from a third extruder to further laminate protective layers on both surfaces of the molten material composed of a total of 201 layers in a laminated state. The feed of the third extruder was adjusted so that the protective layers accounted for 20% of the total. The molten laminate was guided as-is to a die and cast on a casting drum to prepare an unstretched laminated film consisting of a total of 201 layers (the protective layers were not counted) wherein Layer A and Layer B were alternately laminated so that the thickness of each layer became equal.

In this case, the amounts of Layer A and Layer B extruded were adjusted so that they became 1:1 and lamination was carried out so that the surface layers were formed by Layer B. This multilayer unstretched film was stretched 3.0 times in the film-forming direction at a temperature of 90°C and further stretched 3.0 times in the width direction at a temperature of 95°C. During this procedure, many foreign matter defects were generated to make film formation difficult. Thus, it was not possible to obtain a biaxially stretched film with little hue irregularity.

[Comparative Example 2]

Using aliquots of polyethylene-2,6-naphthalate having a melting point of 267°C and an intrinsic viscosity (measured in orthochlorophenol at 35°C) of 0.62 as a resin for Layer A and the stereocomplex polylactic acid composition used in Example 1 as a resin for Layer B, each was dried by keeping at 180°C for 4 hours (polyethylene-2,6-naphthalate) and at 100°C for 4 hours (the stereocomplex polylactic acid composition). Thereafter, they were fed to extruders and heated to 300°C to form molten state. After polyethylene-2,6-naphthalate for Layer A was divided into 100 layers and the stereocomplex polylactic acid composition for Layer B was divided into 101 layers, they were laminated by using a multilayer feedblock device capable of laminating Layer A and Layer B alternately. Keeping this laminated state, the sterocomplex polylactic acid composition (SCPLA1) was further fed from a third extruder to further laminate protective layers on both surfaces of the molten material composed of a total of 201 layers in a laminated state. The feed of the third extruder was adjusted so that the protective layers accounted for 20% of the total. The molten laminate was guided as-is to a die and cast on a casting drum to prepare an unstretched laminated film consisting of a total of 201 layers (the protective layers were not counted) wherein Layer A and Layer B were alternately laminated so that the thickness of each layer became equal.

In this case, the amounts of the Layer A and the Layer B extruded were adjusted so that they became 1:1 and lamination was carried out so that both of the surface layers were formed by Layer B. This multilayer unstretched film was stretched 3.0 times in the film-forming direction at a temperature of 130°C and further stretched 3.0 times in the width direction at a temperature of 135°C. During this procedure, many foreign matter defects were generated to make film formation difficult and there were large stretching irregularities. Thus, it was not possible to obtain a biaxially stretched film with little hue irregularity.

[Comparative Example 3]

Using polybutylene terephthalate having a melting point of 220°C and an intrinsic viscosity (measured in orthochlorophenol at 35°C) of 0.85 as a resin for Layer A and the stereocomplex polylactic acid composition used in Example 1 as a resin for Layer B, each was dried by keeping at 170°C for 3 hours (polyethylene terephthalate) and at 100°C for 4 hours (the stereocomplex polylactic acid composition). Thereafter, they were fed to extruders and heated to 280°C to become molten. After polyethylene terephthalate for Layer A was divided into 100 layers and the stereocomplex polylactic acid composition for Layer B was divided into 101 layers, they were laminated by using a multilayer

feedblock device capable of laminating Layer A and Layer B alternately. Keeping this laminated state, the sterocomplex polylactic acid composition (SCPLA1) was further fed from a third extruder to further laminate protective layers on both surfaces of the molten material composed of a total of 201 layers in a laminated state. The feed of the third extruder was adjusted so that the protective layers accounted for 20% of the total. The molten laminate was guided as-is to a die and cast on a casting drum to prepare an unstretched laminated film consisting of a total of 201 layers (the protective layers were not counted) wherein Layer A and Layer B were alternately laminated so that the thickness of each layer became equal. In this case, the amounts of Layer A and the Layer B extruded were adjusted so that they became 1:1 and lamination was carried out so that both of the surface layers were formed by Layer B.

When an attempt was made to stretch this multilayer unstretched film 3.0 times in the film-forming direction at a temperature of 70°C, the film was broken because Layer A of polybutylene terephthalate was crystallized, and it was not possible to obtain a biaxially stretched film with little hue irregularity.

[Comparative Example 4]

Except that poly(L-lactic acid) (PLLA1) was used instead of the stereocomplex polylactic acid composition as a resin for Layer B, an attempt was made to fabricate a biaxially oriented laminated film in the same manner as in Comparative Example 1. However, there were generated many foreign matter defects and large stretching irregularities. Thus, it was not possible to obtain unstretched film with little hue irregularity.

[Table 1]

| | Layer B | | | | Layer A | | | | Difference in glass transition temperature (°C) | Optically interfering layer Number of layers |
|---|---|---|---|---|---|---|---|---|---|---|
| | Resin | | | Number of layers | Resin | | | Number of layers | | |
| | Resin | Glass transition temperature (°C) | Melting point (°C) | | Resin | Glass transition temperature (°C) | Melting point (°C) | | | |
| Example 1 | SCPLA 1 | 62 | 216 | 101 | PTN | 77 | 205 | 100 | -15 | 201 |
| Example 2 | SCPLA 1 | 62 | 216 | 138 | PTN | 77 | 205 | 137 | -15 | 275 |
| Example 3 | PDLA 1 | 62 | 170 | 138 | PTN | 77 | 205 | 137 | -15 | 275 |
| Comparative example 1 | SCPLA 1 | 62 | 216 | 101 | PET | 78 | 256 | 100 | -16 | 201 |
| Comparative example 2 | SCPLA 1 | 62 | 216 | 101 | PEN | 113 | 267 | 100 | -51 | 201 |
| Comparative example 3 | SCPLA 1 | 62 | 216 | 101 | PBT | 34 | 220 | 100 | 28 | 201 |
| Comparative example 4 | PLLA 1 | 62 | 175 | 101 | PET | 78 | 256 | 100 | -16 | 201 |

PTN: Polytrimethylene-2,6-naphthalate
PET: Polyethylene terephthalate
PEN: Polyethylene-2,6-naphthalate
PBT: Polybutylene terephthalate

[Table 2]

| | Thickness | | | | | | | | | | Stretching in film-forming direction | | Stretching in width direction | | Heat setting |
|---|---|---|---|---|---|---|---|---|---|---|---|---|---|---|---|
| | Total thickness | Protective layer thickness | Optically interfering layer thickness | | 1st layer | | | 2nd layer | | | | | | | |
| | | | | Layer thickness ratio (1st layer/ 2nd layer) | Minimum thickness | Maximum thickness | Max/ Min | Minimum thickness | Maximum thickness | Max/ Min | | | | | |
| | [μm] | [μm] | [μm] | | [nm] | [nm] | [nm] | [nm] | [nm] | | Stretching ratio (times) | Temp. (°C) | Stretching ratio (times) | Temp. (°C) | Temp. (°C) |
| Example 1 | 33 | 7/7 | 19 | 1.0 | 95 | 95 | 1.0 | 95 | 95 | 1.0 | 3.0 | 60 | 3.0 | 65 | 180 |
| Example 2 | 41 | 9/9 | 24 | 1.0 | 55 | 120 | 2.2 | 55 | 120 | 2.2 | 3.0 | 60 | 3.0 | 65 | 180 |
| Example 3 | 33 | 7/7 | 24 | 1.0 | 95 | 95 | 1.0 | 55 | 120 | 2.2 | 3.0 | 60 | 3.0 | 65 | 150 |
| Comparative example 1 | Difficult to stretch | | | | | | | | | | | | | | |
| Comparative example 2 | Difficult to stretch | | | | | | | | | | | | | | |
| Comparative example 3 | Impossible to stretch | | | | | | | | | | | | | | |
| Comparative example 4 | Difficult to stretch | | | | | | | | | | | | | | |

[Table 3]

| | Resin for layer B | | | | Resin for layer A | | | | Resin for layer B | | | | Resin for layer A | | | |
|---|---|---|---|---|---|---|---|---|---|---|---|---|---|---|---|---|
| | Refractive index before stretching | | | Average refractive index | Refractive index before stretching | | | Average refractive index | Refractive index after biaxial stretching | | | Average refractive index | Refractive index after biaxial stretching | | | Average refractive index |
| | $n_{MD}$ | $n_{TD}$ | $n_Z$ | | $n_{MD}$ | $n_{TD}$ | $n_Z$ | | $n_{MD}$ | $n_{TD}$ | $n_Z$ | | $n_{MD}$ | $n_{TD}$ | $n_Z$ | |
| Example 1 | 1.45 | 1.45 | 1.45 | 1.45 | 1.62 | 1.62 | 1.62 | 1.62 | 1.46 | 1.46 | 1.45 | 1.46 | 1.72 | 1.75 | 1.49 | 1.65 |
| Example 2 | 1.45 | 1.45 | 1.45 | 1.45 | 1.62 | 1.62 | 1.62 | 1.62 | 1.46 | 1.46 | 1.45 | 1.46 | 1.72 | 1.75 | 1.49 | 1.65 |
| Example 3 | 1.45 | 1.45 | 1.45 | 1.45 | 1.62 | 1.62 | 1.62 | 1.62 | 1.46 | 1.46 | 1.45 | 1.46 | 1.72 | 1.75 | 1.49 | 1.65 |
| Comparative example 1 | 1.45 | 1.45 | 1.45 | 1.45 | 1.58 | 1.58 | 1.58 | 1.58 | 1.46 | 1.46 | 1.45 | 1.46 | 1.66 | 1.67 | 1.49 | 1.61 |
| Comparative example 2 | 1.45 | 1.45 | 1.45 | 1.45 | 1.62 | 1.62 | 1.62 | 1.62 | 1.46 | 1.46 | 1.45 | 1.46 | 1.75 | 1.76 | 1.49 | 1.67 |
| Comparative example 3 | 1.45 | 1.45 | 1.45 | 1.45 | 1.57 | 1.57 | 1.57 | 1.57 | 1.46 | 1.46 | 1.45 | 1.46 | Impossible to stretch | | | |
| Comparative example 4 | 1.45 | 1.45 | 1.45 | 1.45 | 1.58 | 1.58 | 1.58 | 1.58 | 1.46 | 1.46 | 1.45 | 1.46 | 1.66 | 1.67 | 1.49 | 1.61 |

[Table 4]

| | Optical characteristics | | | Mechanical characteristics | | | | Thermal characteristics | | | | Thickness | Practical characteristics |
|---|---|---|---|---|---|---|---|---|---|---|---|---|---|
| | Peak wavelength | Maximum reflectivity | Minimum reflectivity. (baseline) | Strength at break | | Elongation at break | | Thermal shrinkage (90°C) | | Thermal shrinkage (120°C) | | Range of variation | Color irregularity |
| | | | | MD | TD | MD | TD | MD | TD | MD | TD | | |
| | [nm] | [%] | [%] | [Mpa] | [Mpa] | [%] | [%] | [%] | [%] | [%] | [%] | [%] | |
| Example 1 | 630 | 100 | 9.5 | 127 | 130 | 169 | 161 | 0.1 | 0.3 | 0.9 | 1.5 | 3% | Excellent |
| Example 2 | 496 | 100 | 3.3 | 129 | 136 | 160 | 148 | 0.3 | 0.5 | 1.5 | 1.8 | 3% | Excellent |
| Example 3 | 628 | 100 | 7.5 | 115 | 124 | 130 | 120 | 0.8 | 1.2 | 2.8 | 3.2 | 5% | Excellent |
| Comparative example 1 | - | | | | | | | | | | | | Poor |
| Comparative example 2 | - | | | | | | | | | | | | Poor |
| Comparative example 3 | - | | | | | | | | | | | | Poor |
| Comparative example 4 | - | | | | | | | | | | | | Poor |

## Claims

1. An oriented laminated film, **characterized in that** the film is obtained by alternately laminating Layer A and Layer B such that reflection is generated by optical interference due to a difference in refractive indices of Layer A and Layer B, wherein Layer A comprises an aromatic polyester containing a trimethylene-2,6-naphthalenedicarboxylate unit as a main repeating unit and has a layer thickness in a range of 0.05 to 0.5 μm; Layer B comprises a polylactic acid composition and has a layer thickness in a range of 0.05 to 0.5 μm; and a reflectivity curve thereof for light in a wavelength range of 400 to 1,600 nm has a reflection peak having maximum reflectivity which is at least 20% higher than the reflectivity baseline.

2. The oriented laminated film according to claim 1, which is a biaxially oriented laminated film.

3. The oriented laminated film according to claim 1 or 2, wherein Layer B is a polylactic acid composition having a melting point in a range of 150°C to 230°C.

4. The oriented laminated film according to any of claims 1 to 3, wherein a degree of stereocomplex crystallinity (S) of the polylactic acid composition which constitutes Layer B is 90% or more.

5. The oriented laminated film according to any of claims 1 to 4, wherein Layer A comprises an aromatic polyester containing 90 mol% or more of trimethylene-2,6-naphthalenedicarboxylate units based on the total repeating units.

6. The oriented laminated film according to any of claims 1 to 5, wherein the outermost layers are Layer B laminated as protective layers.

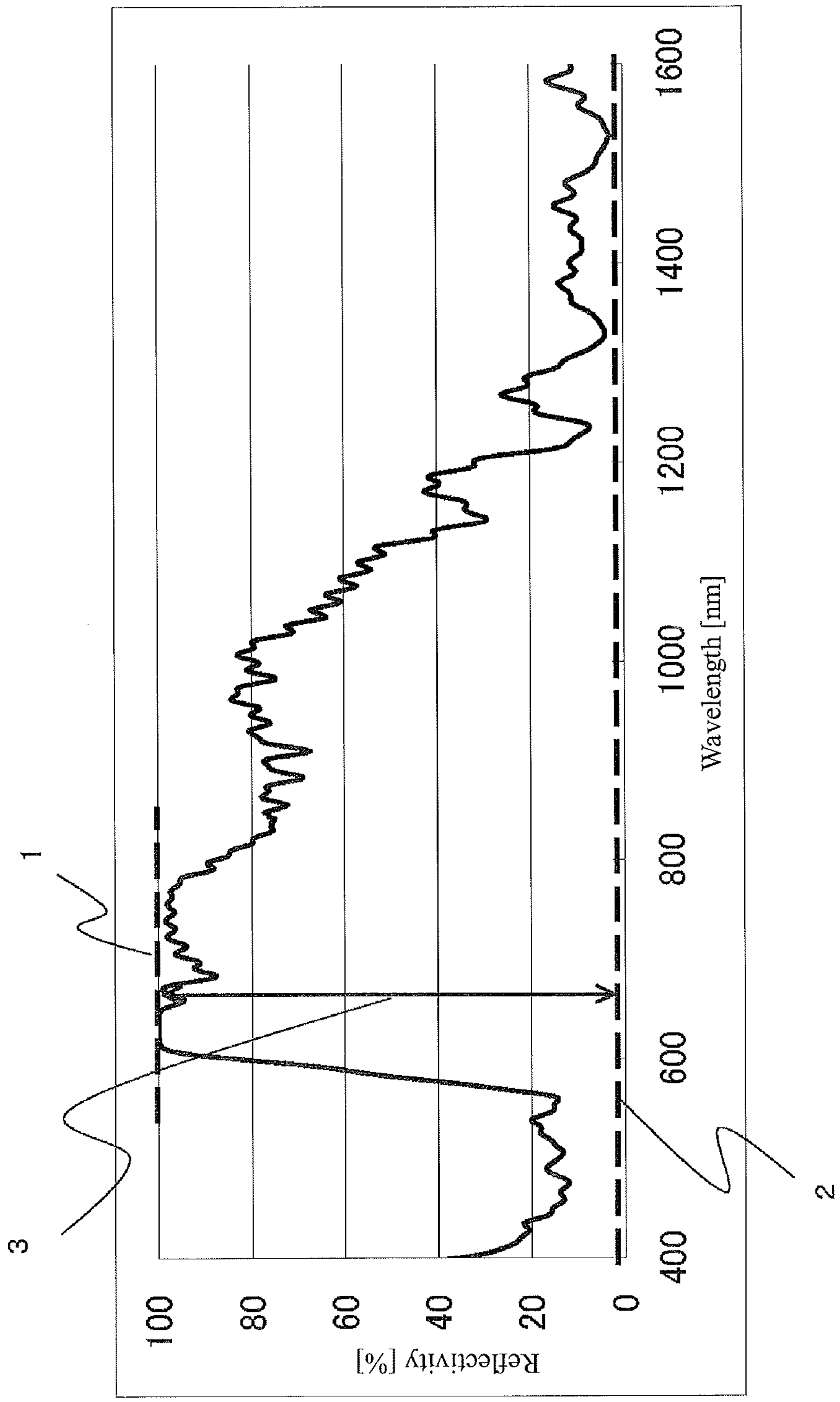
100
80
60
40
20
0
Reflectivity [%]
400
600
800
1000
1200
1400
1600
Wavelength [nm]
1
2
3

Fig. 1

**INTERNATIONAL SEARCH REPORT**

International application No.
PCT/JP2011/078228

A. CLASSIFICATION OF SUBJECT MATTER
*B32B27/36*(2006.01)i, *B32B7/02*(2006.01)i, *B32B27/00*(2006.01)i, *G02B5/26*(2006.01)i, *G02B5/28*(2006.01)i

According to International Patent Classification (IPC) or to both national classification and IPC

B. FIELDS SEARCHED

Minimum documentation searched (classification system followed by classification symbols)
B32B1/00-43/00, G02B5/20-5/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| A | JP 2007-062081 A (Teijin DuPont Films Japan Ltd.), 15 March 2007 (15.03.2007), claim 1; paragraphs [0001], [0009] (Family: none) | 1-6 |
| A | JP 2009-501096 A (BASF Catalysts L.L.C.), 15 January 2009 (15.01.2009), claims 1, 8; paragraph [0001] & WO 2007/008339 A1 claims 1, 8; page 1, lines 9 to 11 | 1-6 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 March, 2012 (02.03.12) | 13 March, 2012 (13.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009501096 A
- WO 2010071213 A